(19) **Europäisches Patentamt / European Patent Office / Office européen des brevets**

(11) **EP 3 091 850 B1**

(12) # EUROPEAN PATENT SPECIFICATION

(45) Date of publication and mention
of the grant of the patent:
**22.11.2017 Bulletin 2017/47**

(51) Int Cl.:
*A23K 20/158* (2016.01)    *A23K 50/80* (2016.01)
*A23L 17/00* (2016.01)

(21) Application number: **14799520.3**

(22) Date of filing: **29.08.2014**

(86) International application number:
**PCT/HU2014/000078**

(87) International publication number:
**WO 2015/028832 (05.03.2015 Gazette 2015/09)**

(54) **PROCESS FOR FEEDING FISH, FISH MEAT AND FOOD PRODUCT**

VERFAHREN ZUM FÜTTERN VON FISCHEN, FISCHFLEISCH UND NAHRUNGSMITTELPRODUKT

PROCÉDÉ POUR LE NOURRISSAGE DES POISSONS, VIANDE DE POISSON ET PRODUIT ALIMENTAIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.08.2013 HU P1300507**

(43) Date of publication of application:
**16.11.2016 Bulletin 2016/46**

(73) Proprietor: **Nemzeti Agrárkutatási És Innovációs Központ (Naik)**
**2100 Gödöllö (HU)**

(72) Inventors:
• **CSENGERI, István**
**H-5540 Szarvas (HU)**
• **RÓNYAI, András**
**H-5540 Szarvas (HU)**
• **NAGYNÉ BÍRÓ, Janka**
**H-2097 Pilisborosjen (HU)**
• **FELEDI, Tibor**
**H-5630 Békés (HU)**
• **ADORJÁN, Ágnes**
**H-3433 Nyékládháza (HU)**
• **MOLNÁR, Judit**
**H-5540 Szarvas (HU)**
• **PERCZE, Vanda**
**H-6600 Szentes (HU)**

(74) Representative: **Svingor, Adam**
**Danubia**
**Patent & Law Office LLC**
**Bajcsy-Zsilinszky út 16**
**1051 Budapest (HU)**

(56) References cited:
**US-A1- 2009 202 672    US-A1- 2012 204 802**

• **Elagba Haj ET AL: "2011 Academic Journals Fatty acids content and profile of common commercial Nile fishes in Sudan", International Journal of Fisheries and Aquaculture, 1 June 2011 (2011-06-01), pages 99-104, XP055161797, Retrieved from the Internet: URL:http://www.academicjournals.org/IJFA [retrieved on 2015-01-13]**
• **R Hemati Matin ET AL: "Corresponding Author: The Fatty Acids Profile in Mackerel (Scomberomorus guttatus) and its Shelf Life in Cold Storage at -18°C", Global Veterinaria, 1 January 2012 (2012-01-01), pages 665-669, XP055161799, Retrieved from the Internet: URL:http://idosi.org/gv/GV8(6)12/18.pdf [retrieved on 2015-01-13]**
• **D Ljubojevic ET AL: "FATTY ACID COMPOSITION OF FISHES FROM INLAND WATERS", Bulgarian Journal of Agricultural Science Bulg. J. Agric. Sci. Supplement, 1 January 2013 (2013-01-01), pages 62-71, XP055161802, Retrieved from the Internet: URL:http://www.agrojournal.org/19/01-12s.p df [retrieved on 2015-01-13]**

EP 3 091 850 B1

**Description**

**FIELD OF THE INVENTION**

The invention relates to feeding processes for the use of combined feeds to produce functional food products. The feeds, feed supplements that may be used for feeding fish (e.g. of species barramundi, *Lates calcifer*) will have a beneficial impact on the fatty acid composition, the arachidonic acid (ARA) content, the eicosapentaenoic acid (EPA) content and the docosahexaenoic acid (DHA) content of the fish meat through the appropriate processes. The food products produced according to the invention may be useful in the primary or secondary prevention of heart attack. Meat enriched with arachidonic acid+docosahexaenoic acid may be useful in influencing fetal and postnatal development favourably.

**BACKGROUND OF THE INVENTION**

Essential fatty acids are necessary to sustain animal organisms, popular opinion on them has been transformed repeatedly and has been redefined, however. Only linoleic acid was considered essential at first, then also linoleic type fatty acids. In their early works Dyerberg et al [Dyerberg J. et al. Am J Clin Nutr. 28(9):958-966 (1975)] for example calculate only the sum of linoleic acid + arachidonic acid as essential fatty acid content when evaluating fatty acid intake of inuit Eskimos. In later works of the same research group [Bang and Dyerberg, Adv Nutr Res (1980), 3 1-22], however, linoleic type fatty acids are outranked (partially due to the consumption of oils having a significant linoleic acid content, e. g. sunflower oil, soybean oil and the like). Recently, a growing number of articles addresses the beneficial physiological effects of fish oils and omega 3 or linoleic type fatty acids. Nevertheless, omega 6 type fatty acids are also considered essential nutrients [Harris, W.S. et al. Circulation (2009) 119; 902-907. http://circ.ahajournals.org/cgi/content/full/119/6/902]. Arachidonic acid, for example, plays a substantial role in the reduction of stress related effects as well [Koven, W. et al. Aquaculture (2003) 228(1-4), 307-320] and is essential for the embryonic development of both fish and man [Henrotte, E. et al. Aquaculture Research (2010) 41: 53-61; Innis, S.M. Placenta, 26 (Suppl. A), Trophoblast Research (2005) Vol. 19; S70-S75. doi:10.1016/j.placenta.2005.01.005], but it's relevance even until elderdom is getting still better understood.

Precursors of n-6 and n-3 fatty acids, linoleic acid and linolenic acid are oxidized rapidly in the human body and conversion into a derivative having a higher degree of unsaturation is limited [Burdge G.C. Metabolism of $\alpha$-linolenic acid in humans. Prostaglandins, Leukotrienes and Essential Fatty Acids (2006) 75: 161-168] Nutritional studies are therefore focusing more and more on the intake of ready-made arachidonic acid, eicosapentaenoic acid and docosahexaenoic acid. Although intake of fish oil and enriched fish oil results in the increase of the omega-3 index and in concordance the risk of cardiovascular diseases decreases, medical dietetics maintains its statement for regular fish consumption [Kris-Etherton et al. Circulation; (2002) 106: 2747-2757]. Although lipids comprised in fish feed are basic sources of essential fatty acids, the majority of feeds used in aquaculture is - according to our unpublished measurements and literature data - very poor in arachidonic acid, (ARA) for example [Yildiz, M. et al. Turk. J. Vet. Anim. Sci. (2008) 32(3): 151-158].

Extensive research is done today to determine the essential fatty acid content of fish meat and to increase it based on human dietetics and epidemiological studies concerning linolenic acid type essential fatty acids.

Recognition of non-sustainability of the production of fish meal and fish oil sources has been followed by research to increase the content of long chain polyunsaturated fatty acid (LcPUFA) and the applicability of oils rich in linolenic acid. Main integrated projects of the European Union were e. g. "SEAFOODplus" (EU Sixth Framework Programme), starting in 2004 and project "AquaMax" (EU Sixth Framework Programme), starting in 2006. Publications relating to the use of "finishing" or "restoration" feeds, combined feeds to increase the essential fatty acid content of fish meat have come out [Jobling M. Aquacult. Res. (2004) 35, 706-9; Lane, R.L. et al. Lipids (2006) 41, 1029-1038]. The dilution model developed for trout and salmon [Jobling M. Aquaculture (2004) 232, 551-62] was applied to evaluate and forecast the expected LcPUFA levels of fish [Lane, R.L. et al. Lipids (2006) 41, 1029-1038] in these studies, although according to the suggestion of Jobling [Jobling M. Aquaculture (2004) 232, 551-62] the model is probably not valid for "lean" fish.

When using finishing feeds, occasionally a washout phase is added, wherein standard commercial salmon feed containing fish oils is used following the feeding of a rapeseed oil containing feed, for instance [Bell J.G. et al. Aquaculture (2003) 218, 515-528]. The dilution model was likewise employed in these studies to evaluate the expected LcPUFA levels of the vegetable oil fed fish [Benedito-Palos, L. et al., Aquaculture, (2009) 288(1-2), 98-105.]. The present inventors previously reported the use of an analogous finishing feed, albeit lacking the washout phase [Csengeri I. et al., Allattenyesztes és Takarmányozás, (2011) 60(3):281-294].

US2009/0202672A1 [Hartnell, G.F., MONSANTO COMPANY, (2009)]; WO2010027788A1 [Hartnell, G.F., MONSANTO TECHNOLOGY LLC, (2010)] describe augmentation of the polyunsaturated fatty acid (PUFA) content of fish meat, specifically the augmentation of arachidonic acid (ARA), eicosapentaenoic acid (EPA) and docosahexaenoic acid (DHA) content by providing a stearidonic acid (SDA) source to increase the EPA, DHA and GLA (γ-linolenic acid) contents of fish meat. However, arriving at an increased level of LcPUFA **relative to** monounsaturated fatty acids does not appear to be an important aim in US20090202672A1.

The patent application relates to the production of fish meat with increased content of polyunsaturated fatty acids for human alimentary purposes. The process is a one-step process. The composition of the fish fillet was not investigated and fishes other than those of the order Perciformes (catfish, trout and shrimp flesh) were used. WO2008136739A1 describes the use of a lignane, which is supposed to be suitable to increase the EPA, DPA and DHA contents of fish meat by increasing the degree of unsaturation and carbon chain length of stearidonic acid or α-linolenic acid. The patent applications mention barramundi as a possible species.

However, not only the use of fatty acid and oil compositions as feed supplement should be considered when feeding fish, but the balanced supply of feed as well; furthermore, the adjustment of daily feed portions, feed management is of great importance together with a well-balanced feed composition [Glencross, B.D. Aquaculture Nutrition, (2008) 14: 360-373]. According to literature data the species specific daily feed need (regardless of size) may be set between 1.8 and 2.9 MBW% [Glencross, B.D. Aquaculture Nutrition (2006) 12: 291-309.].

US20120204802A1 proposes a feed regimen comprising 6 stages for large fishes listed. No detailed experimental results regarding the growth and feed efficiency of testing of these proposed feed formulations are presented and this document apparently does not provide a clear report on the success of their own concept. Moreover, in US20120204802A1 an increased level of LcPUFA relative to monounsaturated fatty acids does not appear to be an important aim and such a result is not disclosed. Though a high EPA/DHA ratio is emphasized, the high variation of EPA/DHA ratios indicates that this feeding strategy of salmon and other aquacultured fishes has its problems.

In US20120204802A1 no idea of the "purging" phase and its role in the feed regimen is suggested. Similarly, there is no mention of a second phase wherein LcPUFA are quickly deposited without being converted into saturated and monounsaturated fatty acids.

Several papers refer to studies in which fish meat was analysed for fatty acid content [see for example: Mohamed, Elagba Hai Ali and Al-Sabahi, Gamal Nasser "Fatty acids content and profile of common commercial Nile fishes in Sudan" International Journal of Fisheries and Aquaculture Vol. 3 (6), pp. 99-104, (2011); Moini, S. et al., "The Fatty Acids Profile in Mackerel (Scomberomorus guttatus) and its Shelf Life in Cold Storage at -18°C"Global Veterinaria 8 (6): 665-669, 2012; "Ljubojevic D et al., Fatty Acid Composition of Fishes from Inland Waters", Bulgarian Journal of Agricultural Science, 19 (Supplement 1) 2013, 62-71]. None of these studies disclose a feeding method by which an increased level of LcPUFA relative to monounsaturated fatty acids could be achieved and to achieve such a favourable ration in fish, in particular in *Perciformes.*

Accordingly, there is still a need for an economical process providing a favourable ratio of long chain polyunsaturated fatty acids in the flesh of fish raised for human alimentary purposes.

## BRIEF DESCRIPTION OF THE INVENTION

The present inventors have unexpectedly found by evaluating feeding and fatty acid metabolism studies, that a particularly beneficial feeding process may be accomplished by dividing the feeding regimen of juvenile fish into two stages: in a stage I juvenile fish are fed with a feed having high protein and low fat content, while in a subsequent stage II juvenile fish are fed with a feed having a fatty acid content of increased level(s) of one or more long chain polyunsaturated fatty acid(s) (LcPUFA). The ratio of long chain polyunsaturated fatty acid(s) (LcPUFA), particularly the ratio of EPA + DHA to monounsaturated or saturated fatty acids, preferably to oleic acid, is thereby preferably increased in the flesh of the fish, as the one or more LcPUFA(s) is/are effectively deposited in stage II. In contrast, the ratio of LcPUFA or some LcPUFAs compared to monounsaturated or saturated fatty acids is lower in fish fed only with enriched feed according to our experiments.

The invention provides a process for the feeding of fish - preferably fish for the production of edible fish meat and further a functional food product containing said fish meat - wherein said process comprises at least two consecutive stages:

stage I: feeding juvenile fish with a feed having high protein and low fat content, thereby preferably decreasing the level of saturated and monounsaturated fatty acids in the fish meat relative to the weight of the fish; and then
stage II: feeding juvenile fish with a feed having a fatty acid content of increased level(s) of one or more long chain polyunsaturated fatty acid(s) (LcPUFA), to deposit the one or more LcPUFA in the fish meat, thereby preferably increasing the level(s) of said fatty acid(s) relative to the weight of the fish.

Preferably, the feed used in stage I has

- a protein content of at least 45%, preferably at least 48% or 50% or 52% or 54%;
- a fish oil content of at least 3%, 5%, 7% or 9%; and
- a fat content up to 10%, 12%, 14% or 16%

based on the total weight of said feed.

Preferably, the feed has

- a protein content of at least 45%, preferably at least 48%;
- a fish oil content of at least 3%, preferably 5%; and
- a fat content up to 10%, preferably 12%

based on the total weight of said feed.

Preferably the duration of stage I is 2-4 weeks, most preferably 15-25 days or 18-22 days or about 3 weeks.

The daily portion of the feed in stage I of the process of the invention is preferably up to 1% or up to 1.4%, most preferably up to 1.2% of the metabolic body weight (MBW%) of said fish, the metabolic body weight being MBW= $W^{0,8}$, wherein W is the kg body weight of said fish.

The fat content of the feed used in stage II of the process of the invention is preferably at least 12% or 14% or 16% or 18% or 20%.

Preferably, the concentration of the one or more LcPUFA(s) in the feed of stage II of the process of the invention is at least 5 g/kg, preferably at least 10 g/kg, more preferably at least 15 g/kg relative to the total weight of said feed. Preferably, the overall concentration of LcPUFAs in said feed is at least 5 g/kg or 10 g/kg or 15 g/kg, preferably at least 20 g/kg or 25 g/kg or 30 g/kg, most preferably at least 35 g/kg or 40 g/kg or 45 g/kg or 50 g/kg. In a most preferred embodiment the concentration of eicosapentaenoic acid and docosahexaenoic acid together is at least 40 g/kg, most preferably at least 42 g/kg or 44 g/kg in the feed of stage II.

The LcPUFA is preferably selected from the group consisiting of: arachidonic acid (ARA), eicosapentaenoic acid (EPA), docosahexaenoic acid (DPA) and any combinations thereof.

Preferably, the duration of stage I is 2-4 weeks, most prefereably 3-4 weeks, preferably 18-28 says or 20-25 days or about 3 weeks.

According to a preferred embodiment of the invention, the fat content of the feed used in stage II is increased gradually, preferably with 0-30 g/kg or 5-25 g/kg or 10-20 g/kg weekly based on the total weight of said feed.

In a preferred embodiment of the invention, in an additional step, the feed used in the finishing phase of fish fries prior to stage I has

- a protein content of at least 30% or 40% or 45%; and
- a fat content of not more than 10% or 12% or 14%.

The fish used in the process of the invention preferably belong to the order of Perciformes, more preferably to the suborder of Percoidei, most preferably to the family of Latidae. Particularly preferably the fish used in the process of the invention are of the genus Lates, most preferably of the species barramundi (*Lates calcalifer*). Preferably the fish are chatadromous in their natural environment. Preferably cultivation is performed in freshwater. According to this embodiment, preferably, i) feeding is started when the body weight of juvenile fish reaches the range of 300-400 g, preferably 340-360 g and/or ii) the daily portion of the feed in the finishing phase of the nursing of fries prior to starting stage I (preferably in the range of 150-350 g body weight) is not more than 1.7% of the metabolic body weight (MBW%) of the fish, wherein said metabolic body weight is MBW=$W^{0.8}$, wherein W is the kg body weight of the fish.

According to another aspect, the invention provides edible fish meat or fish meat containing the flesh of a fish fed by the process of the invention or produced by the process of the invention.

The ratio of the weight of LcPUFAs or C20:5 and C22:6 fatty acids each or the ratio of the total weight of said fatty acids to oleic acid (based on the weight of the fish or fish fillet) is increased compared to control fish fed with a feed having a fatty acid content of an increased amount of one or more long chain polyunsaturated fatty acid(s) (LcPUFA) throughout the total duration of the feeding process. In a preferred embodiment, the ratio of the weight of fatty acids described above is increased compared to fish fed by a method identical to the process but fed with a fatarm feed (e. g. fed with the feed of stage I through the whole duration of rearing).

The invention provides edible fish or fish meat containing one or more LcPUFA(s) deposited during feeding and the LcPUFA content of which is thereby increased and wherein the ratio of total weight of LcPUFAs to the weight of oleic acid based on the weight of the fish or fish fillet, preferably based on the fillet, is at least 1.05, preferably at least 1.06 or at least 1.07.

The invention provides edible fish or fish meat wherein the ratio of the total weight of fatty acids C20:5 and C22:6 to the weight of oleic acid (C18:1) (based on the weight of the fish or fish fillet or on the total amount of fatty acids or on the total amount of the following prioritized fatty acids: C16:0, C18:0, C18:1, C20:5, C22:6) is at least 1.05, preferably at least 1.06 or at least 1.07 or at least 1.08.

The invention provides edible fish or fish meat, wherein

- the ratio of the weight of C20:5 to the weight of oleic acid (C18:1) is at least 0.44 or 0.45 or 0.46, and/or
- the ratio of the total weight of fatty acids C22:6 to the weight of oleic acid (C18:1) is at least 0.63 or 0.64, based on the weight of the fish or fish fillet or the total amount of fatty acids, or the total amount of the following prioritized fatty acids: C16:0, C18:0, C18:1, C20:5, C22:6.

The invention further provides a fish meat food product containing the edible fish meat of the invention and/or produced by processing said meat. Preferably, the food product is preferably a functional food product.

The invention further provides a method for the production of edible fish meat, wherein fish fed by the feeding process of the invention are processed and edible fish meat is obtained hereof.

The invention further provides a method for the production of a fish meat food product, preferably a functional food product, wherein the edible fish meat of the invention is converted or processed into a food product. Preferably, the edible fish meat is

- flavoured and/or
- preserved and/or
- supplemented with another food product and/or
- dosed and/or
- packed to obtain a fish meat food product.

Optionally, the fish meat is treated by heat, e. g. precooked or prefried.

Optionally, the fish meat is coated, e. g. crumbed.

The invention further provides a kit of feeds for the feeding of fish, containing at least two types of feed for the feeding of juvenile fish in two consecutive stages, wherein

the feed of stage I has high protein and low fat content and

the feed of stage II has a fatty acid content of increased level(s) of one or more long chain polyunsaturated fatty acid(s) (LcPUFA).

Preferably, in the kit of feeds

the feed of stage I is defined as above or defined by the description of stage I and

the feed of stage II is defined as above or defined by the description of stage II.

Most preferably the kit of feeds further contains a feed for the feeding of fries, said feed being preferably defined by the step of nursing the fries above.

## DEFINITIONS

As used herein, the term "juvenile" fish refers to the stage of development between the stage of "fries" and the stage of commercially marketable fish for alimentation, characterized preferably by a minimum of the fatty acid content depending on the level of feeding, preferably in the range of 0.6-1.0 MBW%. The body weight of juvenile barramundi is at least 100 g or 150 g or 200 g. Preferably, the body weight of juvenile barramundi used in the process of the invention is at least 250 g or 300 g, most preferably at least 350 g and not more than 400 g or 450 g or 500 g.

The term "fry" refers to the stage following larval state, when fish are able to feed alone, preferably to fish older than precultivated fish. Barramundi less than 1 g are called precultivated fries, while those above this size till the age of being a juvenile are called fries.

The term "edible" fish or fish meat refers to fish or fish meat suitable for alimentation.

"Polyunsaturated fatty acids" (PUFA) are (mono)carboxylic acids being the main components of fats or oils of plant or animal origin, containing open-chained aliphatic carbon chains, wherein the carbon chain comprises more than one double bonds.

"Long chain polyunsaturated fatty acids" (LcPUFA) are polyunsaturated fatty acids with a carbon chain of at least 20 carbon atoms long and preferably not longer than 24 or 22 carbon atoms.

## BRIEF DESCRIPTION OF THE DRAWINGS

Figure 1 Levels (%-g/100g) of oleic acid and LcPUFA (EPA+DHA) in fries

Figure 2 Increase of the level of palmitic acid in barramundi fries
Figure 3 Increase of the level of oleic acid in barramundi fries
Figure 4 Optimum of the EPA + DHA content in barramundi fries
Figure 5 Increase of the level of palmitic acid in juvenile barramundi
Figure 6 Increase of the level of oleic acid in juvenile barramundi
Figure 7 Change of the EPA + DHA content in juvenile barramundi
Figure 8a Increase of the level of oleic acid (%) in fries and levels of EPA+DHA (%-g/100g)
Figure 8b Increase of the level of oleic acid (%) in juvenile fish and levels of EPA+DHA (%-g/100g)

## DETAILED DESCRIPTION OF THE INVENTION

### General description of the invention

The invention provides processes for the feeding of fish which are suitable to obtain functional edible materials when using appropriate feeds, feed supplements. Functional foods are a more efficient element of varied nutrition in maintaining health and facilitating the prevention of diseases than traditional foods. Essential fatty acids may form a suitable base for the production of functional foods from fish meat.

Functional foods are considered a potential means of limiting health related costs by the governments of several countries. Research of functional foods has a long tradition in HAKI. We have started to investigate the feasibility of obtaining functional foods from barramundi based on our previous favourable results in the BARRA_09 project. Based on our observations we have developed the process of the invention of which the main point is to utilise the sustainable fatty acid sources in a more efficient and eco-friendly manner by the combined feeding process termed "depot purge & flash deposition". The main element of the "depot purge & flash deposition" process is the combination of the "depot purge" stage (purging of fatty acid depots) taking into account the feeding history of the fish and the "flash deposition" stage (flash depositing of dietary fatty acids). The levels of saturated and monounsaturated fatty acids of the fish flesh are decreased and the growth of the fish is simultaneously accelerated by administering a feed having high protein and low fatty acid content in the "depot purge" stage.

The high protein and low fatty acid content distinguishes the "depot purge" process from the "washout" process. In the "washout" process only commercially available, fish oil containing feed is used following the administration of a feed of high linoleic acid (18:2n6) and linolenic acid (C18:3n3) content (the said fatty acids are PUFA, they are, however, not LcPUFA). Although this method (i.e. the "washout" process) might be suitable to decrease the levels of PUFAs, it does not induce the fast growth of fish, e. g. fries.

A feed rich in long chain essential fatty acids (LcPUFA) is fed in the flash deposition stage and fish are made to deposit abruptly ("in a flash"). Our process is different from the existing methods in considering the fatty acid depositing effects of the feeding history of the fish in a different manner and in applying an accelerated fatty acid deposition.

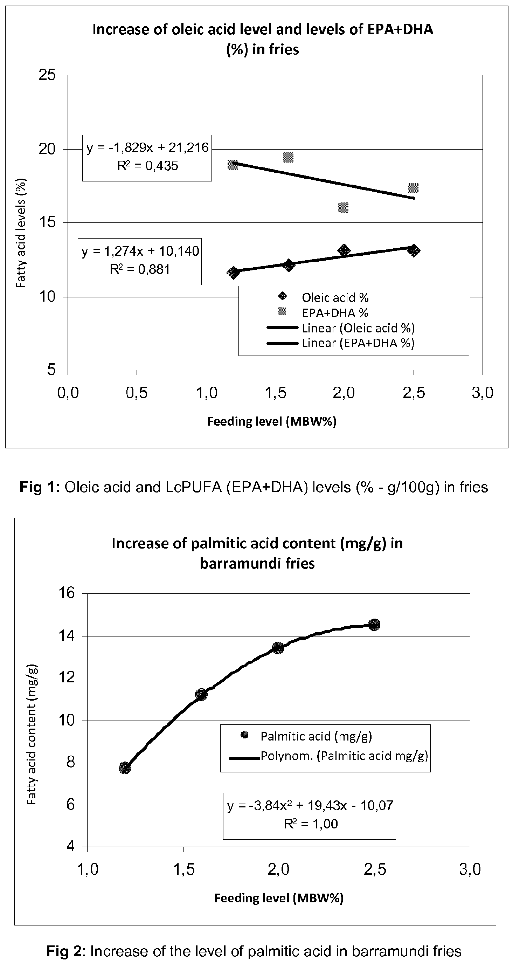

We have observed in feeding studies with barramundi (*Lates calcalifer*) fries and juvenile fish that at higher feeding levels (2.0-2.5 MBW%) the ratio of monounsaturated (monoene) oleic acid is increased and the sum ratio of nutritionally significant long chain fatty acids having a high degree of unsaturation (EPA + DHA) is simultaneously decreased in fish samples (Fig 1). The process of the invention is preferably applied to barramundi (*Lates calcalifer*) although it may be used by any other fish for alimentation, preferably by Percoidei.

The meat of barramundi is of premium category due to being bone free and having excellent meat quality. It has an unlimited export property within time of commerce and according to experiences up to date is most attractive. In Hungary, barramundi is farmed by Jászkiséri Halas Kft. at the time of the application. Although the consumption of fish meat is generally considered healthy, the nutritional value of fish meat may be enhanced: cultivation in fish farms provides an excellent opportunity for the production of functional foods since the majority of factors influencing the composition of fish meat may be controlled during farming.

## EXPERIMENTS

The invention will be further described by way of example through the experiments carried out by the inventors. The scope of the invention, however, shall not be limited thereto.

### Preexperiments with fish fries

The methodology of the studies performed with fish fries and the detailed results thereof are shown in Table 6. Fish weighing approximately 1 g were fed with a feed having high protein and energy content (raw protein: 64%, raw fat: 12%, metabolic energy 20.8 MJ/kg) in the studies performed on barramundi fries. Triple repeat groups raised in 12 L tanks supplied with 28.1±0.1 °C water were fed with a daily portion of feed in an amount of 0.7, 1.2, 1.6, 2.0 and 2.5% MBW. Feeding was ceased before the end of the experiment in the group of fish fed with a daily portion of 0.7% MBW due to the significant rate of death. Daily portions calculated based on the metabolic body weight (MBW $kg^{0.8}$) were administered to the fish in 5 equal portions. Whole fish bodies were sampled at the end of the experiment, body composition data were determined from the samples. Fatty acid composition and content of the fish body samples were also examined. Fatty acid methyl esters were separated on a medium polarity capillary column (DB-225; 30 m x 0.25 mm x 0,25 m) in a gas chromatography system equipped with an AGILENT "5973N" flame ionisation detector (FID) and mass spectography detector (MSD). Quantitative determination of the fatty acid content was performed using specific response factor (SRF) [Ackman, R.G. and Sipos, J.C. J. Am. Oil Chem. Soc. (1964) 41.377-378.; Ackman, R.G. and Sipos, J.C. J. Chromatog. (1964) 16.298-305] and a lignoceric acid methyl ester internal standard. Quantitative proportions of fatty acids were determined by quadratic regression or the so-called "broken line" method according to Zeitoun [Zeitoun, L. H. et al. J. Fish. Res. Bd Canada, (1976) 33: 167-172].

SGR (specific growth rate) values may be calculated with the following formula:

$$\textbf{SGR} = [\,(\ln \textbf{W2} - \ln \textbf{W1})\,/\,(\textbf{t2} - \textbf{t1})\,]\,\textbf{x}\,\textbf{100} \qquad \textbf{(Formula 1)}$$

wherein W1 and W2 represent the body weight of fish at the beginning and the end of the growth period, t1 and t2 are the dates of the beginning and end of the same period, their difference is thus the length of the period in days [Chadwick, E. M. P. et al., (Editors) Evaluation of strategies for Saltwater Salmon Aquaculture NRC Research Press, Ottawa, Ontario, Canada (2010) page 40].

Figure 1 shows the levels of oleic acid and LcPUFA (EPA+DHA), (% - g/100g) at different feeding levels. The figure shows that the increase of the feeding level results in the increase of the level of oleic acid, while the level of LcPUFAs decreases (although it remains above the level of oleic acid).

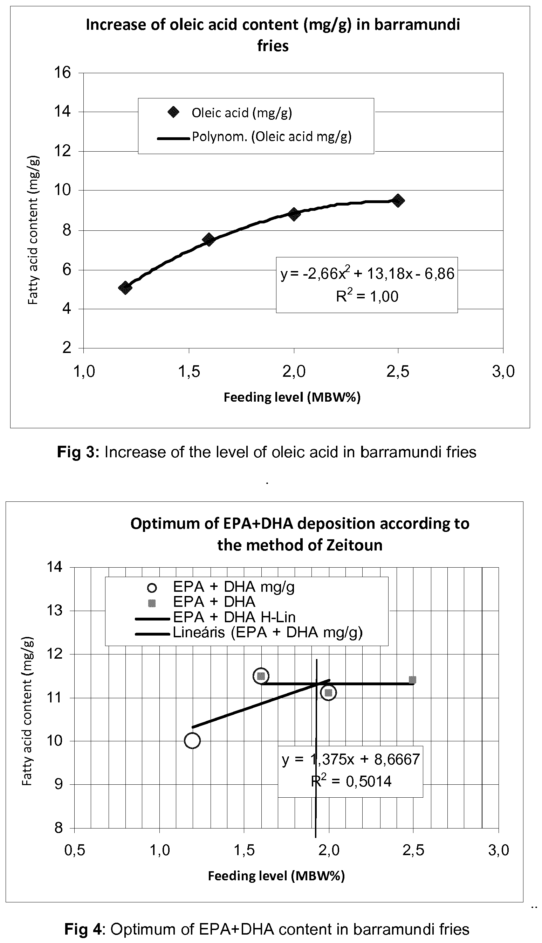

We have confirmed by the evaluation of the fatty acid content of the fish body that fish converted the excess energy (predominantly gained from fatty acids) into palmitic acid and oleic acid by increasing intensity in strong correlation with the feeding level (MBW%) (palmitic acid: $R^2 = 0,99996$ and oleic acid: $R^2 = 0,99895$, Fig 2 and 3, respectively).

The ratio of the sum of essential fatty acids considered most significant in human nutrition has shown an optimum-type tendency in fish samples. The optimal feeding level was determined by the "broken line" method according to Zeitoun [Zeitoun, L. H. et al. (1976), see above] (Fig 4).

The optimum-type tendency indicates a change resulting maximum or saturation type curves in the EPA + DHA content of the fillet. The "broken line" method according to Zeitoun has been used on Fig 4 due to the complex evaluation methods of saturation curves. A regression line was fitted to the 3 "o" points of the figure, the horizontal line representing the mean value belongs to the smaller, black squares. Overlapping is acceptable according to the method. This value represents the fatty acid content relative to the weight of the fish body. Although the 4 points measured allows a small degree of uncertainty, it can be stated that when high EPA + DHA content is desired in proportion of the weight of the fish, the optimal feeding level is between 1.6 and 2.0 MBW% of the feed used. EPA + DHA content is lower below this level and does not increase substantially above this level.

Preexperiments on juvenile fish

Details of the studies performed on juvenile fish are shown in Table 7.

The studies of juvenile fish were performed on bigger fish of approximately 450 g body weight, at a lower (0.5-1.1 MBW%) feeding level. Besides general body composition data, the fatty acid metabolism of juvenile barramundi fish fed with different daily portions of feed was also assessed in detail based on the signs drawing the attention to moderate feeding observed with fries. The fish in triple repeat groups weighing approximately 450 g were fed with a daily portion of feed (pellet size: 9 mm; protein: 45%, fat: 15%, fiber: 2.5%, ash: 8%, DE:16.2 MJ/kg) corresponding to 0.5; 0,7; 0.9 and 1.1 % of the metabolic body weight (MB, $kg^{0,8}$) during the 35-day long experiment.

The SGR value increased significantly with the increase of the daily feed portions in line with the correlation characteristic of fish. Results of the fatty acid content assays, however, indicated that the levels of saturated and monounsaturated fatty acids (SFA and MUFA) had been already high at the start of the feeding experiment due to prior feeding. This might have been indicative of a disadvantageous feeding history and could partly explain the high values of the feed conversion ratio (FCR).

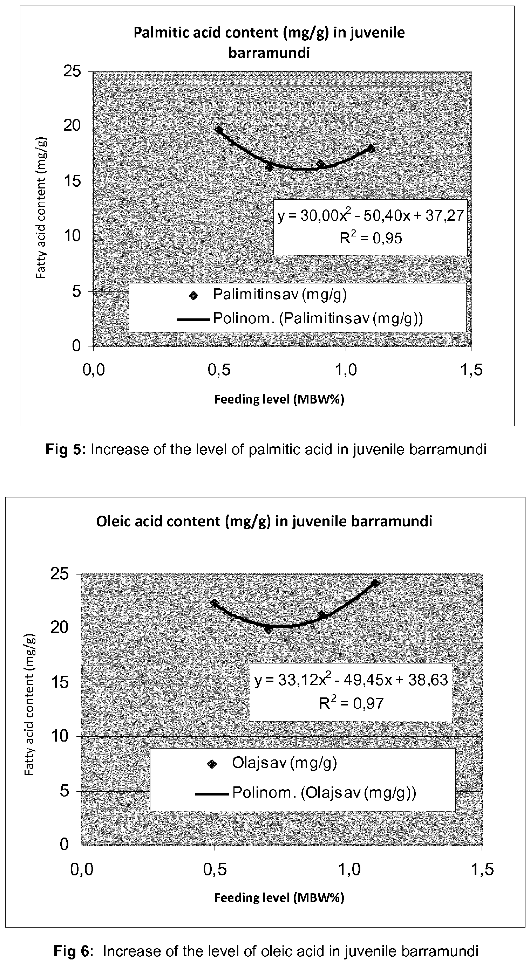

We have unexpectedly found in the studies with juvenile fish that both the palmitic acid (C16:0) content and the oleic acid (C18:1) content of the fish kept previously at a higher feeding level (1.6-2.5 MBW%; Table 6) dropped to 0.8 MBW% feeding level. Experiments with fries at level 1.2 MBW% and below had to be terminated due to the significant amounts of death. With juvenile fish, however, both the content of palmitic acid (C16:0) and oleic acid (C18:1) have begun to increase (Fig 5 and 6) above feeding level 0.8 MBW%, confirming our hypothesis supra of conversion and deposition of the excess fat content.

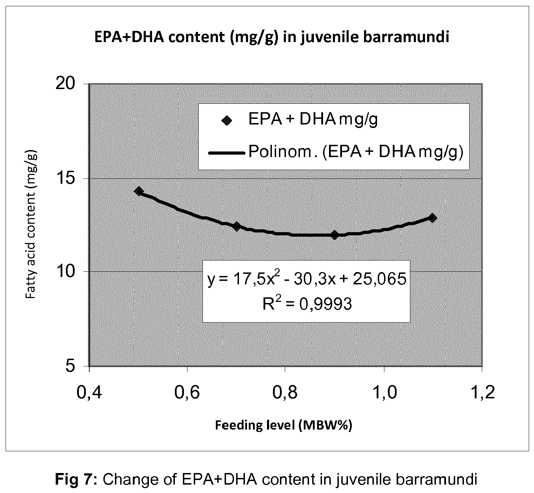

In fish fed at a feeding level above 0.8 MBW% the amount of fatty acids EPA and DHA significant in terms of human nutrition has also begun to increase (Fig 7).

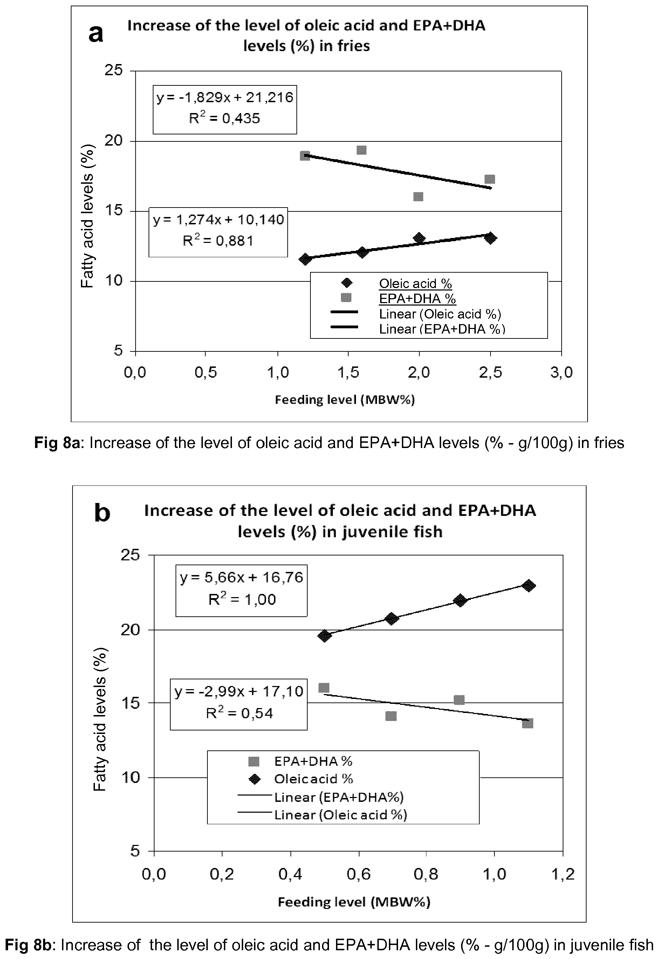

Evaluating the regression data of Fig 5, 6 and 7 it is plausible that the increase of the EPA+DHA fatty acid content significant in terms of human nutrition at a feeding level above 0.8 MBW% observed in juvenile fish is transient and reaches a maximum similarly to that of observed in fries, expectedly below feeding level 2.0 MBW%. According to our observation fish will convert the EPA+DHA fatty acid content into palmitic oil and subsequently oleic acid. The use of fish oils having an outstanding high omega 3 content or LcPUFA enriched compositions in stage II (flash deposition) of the process ("depot purge & flash deposition") of the invention is thereby justified. Our hypothesis is supported by the changes of the level of oleic acid measured in the studies with fries and juvenile fish and levels of EPA + DHA measured in the studies of juvenile fish (comparison of Fig 8a and 8b).

The process of the invention was developed based on the above observations; the essence of the process is the utilisation of the sustainable essential fatty acid sources in a more efficient and environment-friendly manner in the combined feeding method of the invention, termed "depot purge & flash deposition" process. The essential element of the process termed "depot purge & flash deposition" is a combination of stage I (depot purge stage, i.e. purge of fatty acid depots) and stage II (flash deposition stage, i.e. flash depositing of dietary fatty acids) taking into account the fatty acid depositing effects of the feeding history. The levels of saturated and monounsaturated fatty acids of the fish flesh are decreased by administering a feed having high protein and a relative low fat content in the stage I ("depot purge" phase) and accelerating the growth of the fish. A feed rich in long chain polyunsaturated fatty acids (LcPUFA) is fed in stage II, flash deposition stage, and fish are made to deposit abruptly ("in a flash").

Our process is different from previously described methods in terms of e. g. considering the fatty acid depositing effects of the feeding history of fish differently and applying an accelerated fatty acid deposition in stage II. The disclosure describes a method for producing a functional food and edible material suitable for introducing a high level of the forms of essential fatty acids (LcPUFA) having a higher degree of unsaturation, (e. g. γ-linolenic acid, arachidonic acid, stearidonic acid, eicosapentaenoic acid and docosahexaenoic acid) into the flesh of the fish in an economic manner.

Implementation of a proposed embodiment of the invention is demonstrated in Example 1.

**EXAMPLE 1**

We used the combined feeding process termed "depot purge & flash deposition" for a more efficient and environment friendly utilisation of the essential fatty acids in the experiments of the example based on the signs drawing the attention to moderate and modified feeding observed with barramundi fries. Oil (cod liver oil - CLO), enriched EPA (Omega-3H 7010EE; min. 70% EPA +8 % DHA ethyl ester - HUATAI Biopharm Inc., Deyang, P.R. China 618304) and DHA (Omega-3H DHA80EE; min. 80% DHA +5 % EPA ethyl ester - HUATAI Biopharm Inc., China) compositions used in the enrichment process were applied onto the particles of the 9 mm extruded feed base containing 52% raw protein and 12% raw fat using vacuum infusion by a method adapted to the laboratory evaporator (BÜCHI rotary evaporator; type Rotavapor R3; 4 L flask) (Picture 1).

Feeds were stored in a freezer in weekly portions of about ½ kg, except for the actual weekly portions, which were stored in a refrigerator before weighing out the daily portions. The fatty acid composition of the experimental feeds was determined on a DB-225, 30 m capillary column in a gas chromatography system equipped with an AGILENT "5973N" flame ionisation detector (FID) and mass spectography detector (MSD) (Csengeri I. et al Allattenyesztes és Takarmányozás, (2011) 60(3):281-294). Lipids were extracted with a mixture of chloroform and methanol in the ratio of 2:1 in an Ultra-Turrax homogenizer according to the method of Folch et al [Folch, J., Lees, M., Sloane-Stanley, G.H. J. Biol. Chem. (1957) 226, 497- 509.] The fatty acids of the lipids were converted into methyl esters for the extraction. Hydrochloride acid methanol (5% cc. HCl in abs. methanol) was used for esterification [Stoffel, W., Chu, F., és Ahrens, E.H., Jr. Anal. Chem. (1959) 31: 307-308.] in closed ampules rinsed with nitrogen at a temperature of 80 °C for 2-8 hours. Quantification was performed using a lignoceric acid methyl ester internal standard. Fatty acid composition and content of the experimental feeds are shown in Table 1.

According to feeding design, treatment groups "A" and "B" were fed with a single type of feed ("Bc and "B1", respectively) throughout the 6 weeks. Feeding of group "C" was divided into two stages. In stage I, termed "purge" stage, lasting 3 weeks, a feed (C1) having lower oil content was given. In stage II, termed "flash" stage, lasting likewise 3 weeks, a feed (C2) having higher oil content was given. The feeds given to group "C" represented an equal content of raw protein and fat as the feeds given to groups "A" and "B". Juvenile barramundi (average starting weight: $w_0$ from 365 to 367 g; n=8; Table 2) were housed in a streaming flow water system and were fed with the experimental feeds 12 h daily by means of a feeder equipped with a timer for 3+3 weeks.

The double repeat groups of the 42-day (21+21) long experiment were fed with a daily portion of feed in the amount of 1.1 % of the metabolic body weight (MW, $kg^{0,8}$).

Fish were growing evenly, the SGR value could be calculated in line with the formula characteristic of fish, in the average daily tempo of 0.97-1.00%/day, no significant difference between treatments was detected (Table 2). As expected, there was no significant difference concerning the feed conversion ratio either: 1.16-1.20 kg feed/kg weight gain (Table 2).

Prior to the experiment ("start" samples) and following stage II fish were euthanized and filleted and fatty acid composition assays were performed on the fillet samples. Fatty acid composition and content data of the barramundi fish fillet samples are shown in Table 3. Parallel samples of 3 individual fish per tank were analyzed at the end of stage II. Treatment average of the data were calculated and statistically analyzed. One way ANOVA showed an overall significant difference between the fatty acid composition of the treated fillet and the data of the "start" samples (P>95%, in some cases P>99.99%, Table 3 and 4). The differences between fatty acid content of the fillet from fish fed differently in stage I and II (groups "C", "depot purge & flash deposition") and fatty acid composition and content of fish from group "B" fed with a feed having enriched oil content in both stages were essentially as expected based on our new observations and findings (Table 3 and 4). Levels of significance of the differences were less than 0.95 (P>95%) in most cases. For EPA levels e. g.: "B": $7.39\pm1,29$ and "C": $8,05\pm0,91$; P=0.2941 (Table 3); and "B": $7.47\pm0,11$ and "C": $7.82\pm0,32$; P=0,0717 (Table 4). There was no difference between DHA contents (22:6 given in % and mg/g; Table 3 and 4) within the margin of error. Conversion of excess energy (fatty acid) into palmitic acid (C16:0) and subsequently into oleic acid (C18:1) is demonstrated by the C20:5+C22:6 to C18:1 ratio, which was more favourable in group "C" than in group "A" or group "B" (Table 3 and 4).

Comparing data from fish fed with fish oil enriched feed (treatment "A") and groups fed with feed "B" and "C", supplemented with EPA and DHA ethylesters suggests that supplementation with fish oil is more favorable than with esters.

The higher level of palmitic acid (C16:0, Table 3 and 4) determined in group C, "depot purge & flash deposition", indicates that *de novo* fatty acid synthesis was initiated by the fatty acid enrichment. It is ascertained from the level of oleic acid that elongase and desaturase enzymes converting palmitic acid into oleic acid have not yet been induced. Our intention of a rapid, flash-type enrichment is thereby supported. Data of the amount of fatty acids administered with feed are shown in Table 5 to assist evaluation.

It can be concluded that experimental data from the example clearly affirm the observations and conclusions serving as the basis of the invention.

## TABLES

**Table 1 Fatty acid composition and fatty acid content regarding the prioritized fatty acids of the feeds**

| Stages | Stage I | | | | | | Stage II | | | | | |
|---|---|---|---|---|---|---|---|---|---|---|---|---|
| Treatment | **A** | | **B** | | **C** | | **A** | | **B** | | **C** | |
| Feed | **BC** | | **B1** | | **C1** | | **BC** | | **B1** | | **C2** | |
| Fatty acid composition of the feeds (% - g/100 g; prioritized fatty acids) | | | | | | | | | | | | |
| Fatty acid | **Mean** | $\pm$STD | **Mean** | $\pm$STD | **Mean** | $\pm$STD | **Mean** | $\pm$STD | **Mean** | $\pm$STD | **Mean** | $\pm$STD |
| C16:0 | **15.99** | $\pm$0.98 | **15.80** | $\pm$0.06 | **16.95** | $\pm$0.18 | **16.79** | $\pm$0.20 | **15.71** | $\pm$0.19 | **15.20** | $\pm$0.00 |
| C18:0 | **2.98** | $\pm$0.16 | **2.92** | $\pm$0.02 | **3.15** | $\pm$0.06 | **3.21** | $\pm$0.00 | **2.96** | $\pm$0.03 | **2.88** | $\pm$0.05 |
| C18:1 | **9.82** | $\pm$1.37 | **8.90** | $\pm$0.06 | **9.61** | $\pm$0.13 | **10.99** | $\pm$0.05 | **8.95** | $\pm$0.02 | **8.68** | $\pm$0.16 |
| C20:5 | **14.18** | $\pm$2.01 | **15.26** | $\pm$0.06 | **13.21** | $\pm$0.02 | **12.41** | $\pm$0.17 | **15.27** | $\pm$0.06 | **16.15** | $\pm$0.09 |
| C22:6 | **14.80** | $\pm$0.55 | **14.06** | $\pm$0.28 | **11.25** | $\pm$0.12 | **10.90** | $\pm$0.19 | **14.38** | $\pm$0.17 | **15.32** | $\pm$0.19 |
| Fatty acid composition of the feeds (g/kg; prioritized fatty acids) | | | | | | | | | | | | |
| Treatment | **A** | | **B** | | **C** | | **A** | | **B** | | **C** | |
| Feed | **BC** | | **B1** | | **C1** | | **BC** | | **B1** | | **C2** | |
| Fatty acid | **Mean** | $\pm$STD | **Mean** | $\pm$STD | **Mean** | $\pm$STD | **Mean** | $\pm$STD | **Mean** | $\pm$STD | **Mean** | $\pm$STD |
| C16:0 | **22.51** | $\pm$1.30 | **22.82** | $\pm$0.68 | **21.67** | $\pm$0.59 | **22.43** | $\pm$1.23 | **21.08** | $\pm$1.79 | **23.41** | $\pm$0.61 |
| C18:0 | **4.20** | $\pm$0.22 | **4.21** | $\pm$0.11 | **4.03** | $\pm$0.14 | **4.42** | $\pm$0.19 | **4.14** | $\pm$0.24 | **4.44** | $\pm$0.04 |
| C18:1 | **13.82** | $\pm$1.88 | **12.85** | $\pm$0.35 | **12.29** | $\pm$0.37 | **15.08** | $\pm$0.56 | **12.60** | $\pm$0.85 | **13.37** | $\pm$0.10 |

(continued)

| Fatty acid composition of the feeds (g/kg; prioritized fatty acids) | | | | | | | | | | | | |
|---|---|---|---|---|---|---|---|---|---|---|---|---|
| Treatment | **A** | | **B** | | **C** | | **A** | | **B** | | **C** | |
| Feed | **BC** | | **B1** | | **C1** | | **BC** | | **B1** | | **C2** | |
| Fatty acid | **Mean** | $\pm$STD | **Mean** | $\pm$STD | **Mean** | $\pm$STD | **Mean** | $\pm$STD | **Mean** | $\pm$STD | **Mean** | $\pm$STD |
| C20:5 | **19.97** | $\pm$2.90 | **22.05** | $\pm$0.82 | **16.89** | $\pm$0.26 | **16.91** | $\pm$0.49 | **21.46** | $\pm$1.41 | **24.88** | $\pm$0.50 |
| C22:6 | **17.73** | $\pm$3.70 | **20.30** | $\pm$0.27 | **14.38** | $\pm$0.39 | **14.81** | $\pm$0.38 | **20.11** | $\pm$1.18 | **23.61** | $\pm$0.31 |

**Table 2:** Growth and feed utilization of fish per tank

| Tank | 3. Tank | 4. Tank | 5. Tank | 8. Tank | 9. Tank | 10. Tank |
|---|---|---|---|---|---|---|
| **Treatment** | **A** | **B** | **C** | **A** | **B** | **C** |
| **Feed** | **Bc** | **B1** | **C1** | **Bc** | **B1** | **C2** |
| n | 8 | 8 | 8 | 8 | 8 | 8 |
| $W_0$ | 2934.0 | 2932.0 | 2922.0 | 2933.0 | 2923.0 | 2926.0 |
| $w_0$ | 366.8 | 366.5 | 365.3 | 366.63 | 365.38 | 365.75 |
| $W_t$ | 4488.0 | 4531.0 | 4325.0 | 4349 | 4372 | 4468 |
| $w_t$ | 561.0 | 566.4 | 540.6 | 543.6 | 546.5 | 558.5 |
| F stage I (t = 21 days) | 816.3 | 814.3 | 807.8 | 811.1 | 809.7 | 809.7 |
| F stage II (t = 21 days) | 970.1 | 965.4 | 951.5 | 949.9 | 947.0 | 954.6 |
| F I.+II. (t = 42 days) | 1786.4 | 1779.7 | 1759.3 | 1761.1 | 1756.6 | 1764.3 |
| | | | | | | |
| FCR (kg feed/kg weight gain) | 1.150 | 1.113 | 1.254 | 1.244 | 1.212 | 1.144 |
| FCR treatment means | 1.197 | 1.163 | 1.199 | | | |
| $\pm$ SD | $\pm$ 0.067 | $\pm$ 0.070 | $\pm$ 0.078 | | | |
| SGR (%/day) | 1.012 | 1.036 | 0.934 | 0.938 | 0.959 | 1.008 |
| SGR treatment means | 0.975 | 0.997 | 0.971 | | | |
| $\pm$ SD | $\pm$ 0.052 | $\pm$ 0.055 | $\pm$ 0.052 | | | |

**Table 3** Average fatty acid composition and fatty acid content of barramundi fillet samples at the end of stage II per repeat (2-2 repeats)

| No. tank | | | 3 | | 4 | | 5 | | 8 | | 9 | | 10 | | |
|---|---|---|---|---|---|---|---|---|---|---|---|---|---|---|---|
| Treatment | start | | A | | B | | C | | A | | B | | C | | P |
| Feed | - | | control | | Enriched feed throughout | | Enriched feed in stage II | | control | | Enriched feed throughout | | Enriched feed in stage II | | |
| **Fatty acid composition of the fillet samples (% - g/100g; prioritized fatty acids)** | | | | | | | | | | | | | | | |
| Fatty acid | Mean | STD | Mean | ±STD | Mean | ±STD | Mean | ±STD | Mean | ±STD | Mean | ±STD | Mean | ±STD | |
| C16:0 | 16.27 | ±0.32 | 17.98 | ±0.62 | 17.20 | ±0.79 | 18.24 | ±0.59 | 17.92 | ±0.11 | 17.72 | ±0.14 | 18.24 | ±0.59 | 0.0063 |
| C18:0 | 3.77 | ±0.27 | 3.92 | ±0.21 | 3.94 | ±0.20 | 3.89 | ±0.12 | 3.95 | ±0.29 | 3.82 | ±0.13 | 4.34 | ±0.30 | - |
| C18:1 | 24.36 | ±1.56 | 17.45 | ±0.14 | 18.76 | ±2.57 | 17.05 | ±2.58 | 16.99 | ±0.74 | 17.68 | ±2.04 | 16.80 | ±1.04 | 0.0023 |
| C20:5 | 3.43 | ±0.05 | 7.47 | ±0.24 | 7.39 | ±1.29 | 8.05 | ±0.91 | 7.46 | ±0.18 | 7.55 | ±0.69 | 7.60 | ±0.82 | 0.00005 |
| C22:6 | 8.69 | ±0.57 | 10.12 | ±0.68 | 11.16 | ±1.21 | 10.93 | ±0.37 | 10.34 | ±0.40 | 10.53 | ±0.87 | 10.74 | ±1.04 | 0.0293 |
| C20:5/C18:1 | 0.14 | | 0.43 | | 0.39 | | *0.47* | | 0.44 | | 0.43 | | *0.45* | | |
| C22:6/C18:1 | 0.36 | | 0.58 | | 0.59 | | *0.64* | | 0.61 | | 0.60 | | *0.64* | | |
| (C20:5+C22:6)/ C18:1 | 0.50 | | 1.01 | | 0.99 | | *1.11* | | 1.05 | | 1.02 | | *1.09* | | |
| **Fatty acid composition of the fillet samples (g/kg; prioritized fatty acids)** | | | | | | | | | | | | | | | |
| Fatty acid | Mean | ±STD | Mean | ±STD | Mean | ±STD | Mean | ±STD | Mean | ±STD | Mean | ±STD | Mean | ±STD | |
| C16:0 | 3.81 | ±0.99 | 6.59 | ±2.28 | 7.52 | ±3.20 | 8.24 | ±0.52 | 6.56 | ±1.69 | 6.55 | ±1.06 | 6.20 | ±1.33 | - |
| C18:0 | 0.87 | ±0.16 | 1.41 | ±0.38 | 1.70 | ±0.64 | 1.69 | ±0.18 | 1.43 | ±0.25 | 1.41 | ±0.19 | 1.42 | ±0.22 | - |
| C18:1 | 5.76 | ±1.73 | 6.35 | ±1.96 | 8.30 | ±3.93 | *7.73* | ±1.43 | 6.23 | ±1.73 | 6.60 | ±1.87 | *5.72* | ±1.40 | - |
| C20:5 | 0.80 | ±0.20 | 2.71 | ±0.80 | 3.13 | ±0.96 | *3.64* | ±0.47 | 2.74 | ±0.75 | 2.77 | ±0.22 | *2.54* | ±0.20 | 0.0044 |
| C22:6 | 2.01 | ±0.39 | 3.63 | ±0.90 | 4.73 | ±1.41 | *4.91* | ±0.42 | 3.76 | ±0.83 | 3.87 | ±0.34 | *3.60* | ±0.32 | 0.0126 |
| C20:5/C18:1 | 0.14 | | 0.43 | | 0.38 | | *0.47* | | 0.443 | | 0.42 | | *0.444* | | |
| C22:6/C18:1 | 0.35 | | 0.57 | | 0.57 | | *0.64* | | 0.60 | | 0.59 | | *0.63* | | |
| (C20:5+C22:6)/ C18:1 | 0.49 | | 1.00 | | 0.95 | | *1.11* | | 1.04 | | 1.01 | | *1.07* | | |

EP 3 091 850 B1

**Table 4:** Average fatty acid composition and fatty acid content of barramundi fillet samples at the end of stage II per treatment (2-2 repeats)

| Treatment | start | | A | | B | | C | | P |
|---|---|---|---|---|---|---|---|---|---|
| Fatty acid | **Mean** | ±STD | **Mean** | ±STD | **Mean** | ±STD | **Mean** | ±STD | |
| Fatty acid composition of the fillet samples (% - g/100g, prioritized fatty acids) | | | | | | | | | |
| C16:0 | 16.27 | ±0.32 | 17.95 | ±0.04 | 17.46 | ±0.37 | 18.24 | ±0.00 | 0.0015 |
| C18:0 | 3.77 | ±0.27 | 3.94 | ±0.02 | 3.88 | ±0.08 | 4.11 | ±0.32 | 0.4785 |
| C18:1 | 24.36 | ±1.56 | 17.22 | ±0.33 | 18.22 | ±0.76 | 16.93 | ±0.18 | 0.0014 |
| C20:5 | 3.43 | ±0.05 | 7.46 | ±0.01 | 7.47 | ±0.11 | 7.82 | ±0.32 | 0.000001 |
| C22:6 | 8.69 | ±0.57 | 10.23 | ±0.16 | 10.85 | ±0.45 | 10.83 | ±0.13 | 0.0061 |
| Fatty acid composition of the fillet samples (g/kg; prioritized fatty acids) | | | | | | | | | |
| Treatment | start | | A | | B | | C | | P |
| Fatty acid | **Mean** | ±STD | **Mean** | ±STD | **Mean** | ±STD | **Mean** | ±STD | |
| C16:0 | 3.81 | ±0.99 | 6.57 | ±0.02 | 7.03 | ±0.69 | 7.22 | ±1.44 | 0.0276 |
| C18:0 | 0.87 | ±0.16 | 1.42 | ±0.01 | 1.56 | ±0.21 | 1.55 | ±0.19 | 0.0130 |
| C18:1 | 5.76 | ±1.73 | 6.29 | ±0.08 | 7.45 | ±1.20 | 6.72 | ±1.42 | 0.6201 |
| C20:5 | 0.80 | ±0.20 | 2.72 | ±0.02 | 2.95 | ±0.25 | 3.09 | ±0.77 | 0.0030 |
| C22:6 | 2.01 | ±0.39 | 3.70 | ±0.09 | 4.30 | ±0.61 | 4.25 | ±0.92 | 0.0156 |
| (C20:5+C22:6)/ C18:1 | 0.49 | | 1.02 | | 0.97 | | 1.09 | | |

**Table 5:** Fatty acid content administered in feed (prioritized fatty acids)

| No. tank | **3. Tank** | **4. Tank** | **5. Tank** | **8. Tank** | **9. Tank** | **10. Tank** |
|---|---|---|---|---|---|---|
| Feed | **control** | **Enriched feed throughout** | **Enriched feed in stage II** | **control** | **Enriched feed throughout** | **Enriched feed in stage II** |
| | **Stage I** | | | | | |
| Amount of feed/group (g) | 816.3 | 814.3 | 807.8 | 811.1 | 809.7 | 809.7 |
| Fatty acid | Amount of fatty acid administered per group (g/group) | | | | | |
| C16:0 | 18.38 | 18.59 | 17.51 | 18.26 | 18.48 | 17.55 |
| C18:0 | 3.43 | 3.43 | 3.25 | 3.41 | 3.41 | 3.26 |
| C18:1 | 11.28 | 10.46 | 9.93 | 11.21 | 10.40 | 9.95 |
| C20:5 | 16.30 | 17.95 | 13.64 | 16.20 | 17.85 | 13.68 |
| C22:6 | 14.48 | 16.53 | 11.61 | 14.38 | 16.44 | 11.64 |
| | Stage II | | | | | |
| Amount of feed/group (g) | 970.1 | 965.4 | 951.5 | 949.9 | 947.0 | 954.6 |
| Fatty acid | Amount of fatty acid administered per group (g/group) | | | | | |
| C16:0 | 21.76 | 20.35 | 22.27 | 21.31 | 19.96 | 22.34 |

(continued)

|  | Stage II |  |  |  |  |  |
|---|---|---|---|---|---|---|
| C18:0 | 4.28 | 4.00 | 4.22 | 4.20 | 3.92 | 4.24 |
| C18:1 | 14.63 | 12.16 | 12.72 | 14.32 | 11.93 | 12.76 |
| C20:5 | 16.40 | 20.72 | 23.67 | 16.06 | 20.33 | 23.75 |
| C22:6 | 14.37 | 19.41 | 22.46 | 14.07 | 19.04 | 22.54 |
|  | Sum of Stage I-II |  |  |  |  |  |
| Amount of feed/group (g) | 1786 | 1780 | 1759 | 1761 | 1757 | 1764 |
| Fatty acid | Amount of fatty acid administered per group (g/group) |  |  |  |  |  |
| C16:0 | 40.13 | 38.94 | 39.78 | 39.57 | 38.44 | 39.89 |
| C18:0 | 7.72 | 7.43 | 7.47 | 7.60 | 7.33 | 7.50 |
| C18:1 | 25.91 | 22.63 | 22.65 | 25.53 | 22.34 | 22.71 |
| C20:5 | 32.70 | 38.67 | 37.31 | 32.26 | 38.18 | 37.42 |
| C22:6 | 28.84 | 35.94 | 34.08 | 28.45 | 35.48 | 34.18 |
| Fatty acid | Amount of fatty acid administered per treatment (g/ total parallels) |  |  |  |  |  |
| Treatment | control | Enriched feed throughout | Enriched feed in stage II |  |  |  |
| C16:0 | 79.70 | 77.38 | 79.67 |  |  |  |
| C18:0 | 15.32 | 14.76 | 14.97 |  |  |  |
| C18:1 | 51.44 | 44.96 | 45.36 |  |  |  |
| C20:5 | 64.96 | 76.85 | 74.73 |  |  |  |
| C22:6 | 57.30 | 71.43 | 68.25 |  |  |  |

Table 6 Growth, feed and fatty acid utilization data of barramundi fries fed with different daily portions of a feed having high protein and energy content (raw protein: 64%, raw fat 12%, ME energy 21 MJ/kg) in details

| Daily portion (MBW %) | start | (Feed) | 2.5 | 2.0 | 1.6 | 1.2* |
|---|---|---|---|---|---|---|
| Duration of treatment (day) | 0 |  | 35 | 42 | 49 | 49 |
| Weight (wt) (g) | 0.89±0.02 |  | 16.74±1.12 | 17.18±0.81 | 16.96±0.62 | 10.86±0.95 |
| SGR (%/nap) |  |  | 8.56±0.07 a | 7.18±0.05 b | 6.04±0.07 c | 5.15±0.24 d |
| FCR (g/g) |  |  | 0.60±0.01 [a] | 0.61±0.01 [a] | 0.61±0.02 [a] | 0.59±0.01 [a] |
| Mortality (%) |  |  | - | - | 3.03±3.78 | 7.88±3.77 |
| Condition factor (K) |  |  | 1.37±0.04 [a] | 1.33±0.03 [a] | 1.34±0.06 [a] | 1.23±0.03 [b] |
| **Chemical composition** |  |  |  |  |  |  |
| **Sample** | fish body | feed | fish body | fish body | fish body | fish body |
| Dry matter (%) | 21.00 | 92.31 | 28.31 ± 0.79 | 29.68 ± 0.70 | 28.29 ± 0.15 | 25.74 ± 0.33 |
| Raw protein (%) | 13.98 | 62.46 | 16.32 ± 0.13 | 16.84 ± 0.08 | 16.97 ± 0.30 | 16.70 ± 0.31 |
| Raw ash (%) | 2.77 | 8.64 | 3.50 ± 0.12 | 3.81 ± 0.23 | 4.29 ± 0.40 | 3.73 ± 0.20 |

(continued)

| Fatty acid composition (w%) | | | | | | |
|---|---|---|---|---|---|---|
| 16:0 | 17.78 | 14.85 | 19.96 | 19.99 | 18.18 | 17.42 |
| 18:0 | 5.07 | 2.19 | 4.08 | 3.99 | 3.68 | 3.62 |
| 18:1ω9 | 13.73 | 8.96 | 13.12 | 13.07 | 12.08 | 11.59 |
| 18:2ω6 | 6.26 | 7.51 | 5.27 | 5.10 | 5.82 | 5.56 |
| 18:3ω3 | 1.36 | 2.05 | 1.66 | 1.60 | 1.77 | 1.70 |
| 20:4ω6 | 0.86 | 0.47 | 0.42 | 0.46 | 0.55 | 0.61 |
| 20:5ω3 | 7.40 | 9.33 | 5.31 | 5.20 | 6.06 | 6.11 |
| 22:5ω3 | 2.48 | 0.91 | 1.57 | 1.72 | 1.89 | 2.00 |
| 22:6ω3 | 13.25 | 13.52 | 10.84 | 10.97 | 13.17 | 14.43 |
| Total SFA | 28.59 | 23.59 | 28.79 | 29.87 | 27.19 | 27.87 |
| Total MUFA | 29.82 | 33.29 | 34.40 | 34.87 | 32.95 | 33.37 |
| Total n-6 | 7.78 | 7.78 | 6.83 | 6.52 | 7.24 | 6.93 |
| Total n-3 | 27.72 | 27.72 | 22.99 | 21.29 | 25.73 | 24.88 |
| Total PUFA | 35.49 | 35.49 | 29.82 | 27.81 | 32.97 | 31.81 |
| ∑n-3/∑n-6 | 3.56 | 3.56 | 3.37 | 3.26 | 3.55 | 3.57 |
| EPA + DHA | 20.65 | 22.85 | 17.29 | 15.98 | 19.34 | 18.90 |
| ARA | 0.86 | 0.47 | 0.47 | 0.44 | 0.56 | 0.54 |
| Fatty acid content (mg/g) | | | | | | |
| Total fatty acid content | 14.1 | 120.9 | 72.6 ± 8.4 | 67.1 ± 9.5 | 61.6 ± 8.9 | 44.3 ± 3.2 |
| Total SFA | 4.10 | 28.5 | 19.4 | 20.8 | 16.2 | 15.4 |
| Total MUFA | 4.18 | 40.2 | 23.1 | 24.3 | 19.6 | 18.3 |
| Total n-6 | 1.11 | 1.1 | 4.5 | 4.5 | 4.3 | 3.7 |
| Total n-3 | 3.90 | 3.9 | 15.3 | 14.7 | 15.3 | 12.9 |
| Total PUFA | 5.01 | 5.0 | 19.8 | 19.3 | 19.6 | 16.7 |
| | | | | | | |
| ∑n-3/∑n-6 | 3.52 | 3.56 | 3.37 | 3.26 | 3.55 | 3.57 |
| | | | | | | |
| Palmitic acid | 2.55 | 17.9 | 14.5 | 13.4 | 11.2 | 7.7 |
| Oleic acid | 2.23 | 10.8 | 9.5 | 8.8 | 7.5 | 5.1 |
| EPA + DHA | 2.95 | 27.6 | 11.4 | 11.1 | 11.5 | 10.0 |
| ARA | | | 0.31 | 0.31 | 0.33 | 0.28 |
| Values of the same line with different letters are significantly different ((P<0,05) | | | | | | |

**Table 7:** Growth, feed and fatty acid utilization data of barramundi juveniles fed with different daily portions of a feed having high protein and energy content (raw protein: 45%, raw fat 15%, ME energy 16 MJ/kg) in details

| Daily portion (MTT %) | start | 0.5 | 0.7 | 0.9 | 1.1 |
|---|---|---|---|---|---|
| Duration of treatment (nap) | 0 | 35 | 35 | 35 | 35 |
| Weight (wt) (g) | 457 ± 3 | 490.6±37.9 [a] | 519.4±36.1 [b] | 531.3±27.1 [b] | 540.3±42.4 [b] |
| SGR (%/nap) | | 0.21±0.01 [a] | 0.34±0.04 [b] | 0.41±0.09 [bc] | 0.48±0.07 [c] |
| FCR (g/g) | | 1.93±0.07 [b] | 1.67±0.18 [a] | 1.82±0.43 [ab] | 1.90±0.31 [ab] |
| Condition factor (K) | | 1.434±0.068 [a] | 1.488±0.083 [a] | 1.537±0.066 [a] | 1.564±0.050 [a] |
| HSI (%) | | 1.485±0.349 [a] | 1.635±0.239 [a] | 2.001±0.054 [a] | 1.834±0.338 [a] |
| **Chemical composition** | | | | | |
| Dry matter (%) | 32.93±0.53 | 34.15±1.00 | 34.53±0.38 | 35.11±2.10 | 34.61±1.76 |
| Raw protein (%) | 18.63±0.55 | 18.27±0.75 | 18.60±0.25 | 18.71±0.40 | 18.14±0.59 |
| Raw ash (%) | 4.35±0.82 | 4.64±0.70 | 4.59±0.73 | 4.14±0.07 | 4.20±0.16 |
| **Fatty acid composition (w%)** | | | | | |
| 16:0 | 17.50 | 17.39 | 16.91 | 17.07 | 16.77 |
| 18:0 | 3.31 | 3.37 | 3.12 | 3.28 | 3.51 |
| 18:1ω9 | 15.89 | 19.57 | 20.70 | 21.97 | 22.92 |
| 18:2ω6 | 10.12 | 10.60 | 10.83 | 11.16 | 10.94 |
| 18:3ω3 | 2.04 | 2.36 | 2.67 | 2.87 | 2.88 |
| 20:4ω6 | 0.46 | 0.42 | 0.45 | 0.43 | 0.45 |
| 20:5ω3 | 6.25 | 5.67 | 5.29 | 5.24 | 5.09 |
| 22:5ω3 | 1.92 | 1.80 | 1.78 | 1.73 | 1.75 |
| 22:6ω3 | 9.83 | 8.47 | 8.06 | 7.67 | 7.53 |
| Total SFA | 26.70 | 26.12 | 26.95 | 26.01 | 27.01 |
| Total MUFA | 35.75 | 35.90 | 37.28 | 36.90 | 37.64 |
| Total n-6 | 11.33 | 10.34 | 10.25 | 10.70 | 10.31 |
| Total n-3 | 22.66 | 21.77 | 19.66 | 21.13 | 19.20 |
| Total PUFA | 33.99 | 32.12 | 29.90 | 31.83 | 29.51 |
| ∑n-3/∑n-6 | 2.01 | 2.29 | 2.08 | 2.17 | 2.03 |
| EPA + DHA | 16.08 | 15.96 | 14.10 | 15.14 | 13.62 |
| ARA | 0.46 | 0.47 | 0.44 | 0.48 | 0.44 |
| **Fatty acid content (mg/g)** | | | | | |
| Total fatty acid content | 83.3 ± 7.3 | 113.8 ± 9.9 | 96.2 ± 13.8 | 97.2 ± 8.8 | 106.4 ± 25.3 |
| Total SFA | 22.29 | 24.41 | 23.80 | 21.52 | 25.67 |

(continued)

| Fatty acid content (mg/g) | | | | | |
|---|---|---|---|---|---|
| Total MUFA | 29.83 | 34.42 | 33.43 | 31.26 | 36.33 |
| Total n-6 | 9.39 | 10.43 | 9.34 | 9.37 | 10.21 |
| Total n-3 | 18.85 | 20.08 | 17.54 | 17.20 | 18.45 |
| Total PUFA | 28.25 | 30.52 | 26.89 | 26.57 | 28.66 |
| | | | | | |
| ∑n-3/∑n-6 | 2.01 | 2.29 | 2.08 | 2.17 | 2.03 |
| | | | | | |
| Palmitic acid | 14.6 | 19.71 | 16.3 | 16.60 | 18.03 |
| Oleic acid | 13.2 | 22.30 | 19.9 | 21.35 | 24.18 |
| EPA + DHA | 13.38 | 14.32 | 12.45 | 11.99 | 12.87 |
| ARA | 0.38 | 0.43 | 0.39 | 0.39 | 0.42 |
| Values of the same line with different letters are significantly different ((P<0,05) | | | | | |

## INDUSTRIAL APPLICABILITY

By evaluation of the results of feeding and fatty acid metabolism studies of the fish species barramundi (*Lates calcalifer*) we have discovered that storage of essential fatty acids (EFA) was not efficient when the fish were fed by conventional feeding processes. We have found that using conventionally applied finishing or restoration feeds (compound feed) and feeds having similar composition to increase the essential fatty acid content of the fish meat results in the conversion of essential fatty acids significant in human nutrition from said feed into saturated or monounsaturated fatty acids by the fish is of greater rate than expected. We have developed the process of the invention named "depot purge & flash deposition" or shortly, "purge & flash" process, which takes the feeding history of the fish into consideration on the one hand and uses a more efficient essential fatty acid source on the other hand in contrast to feeding processes described and used earlier, to utilize the sustainable essential fatty acid sources in a more efficient and environment-friendly way. The essential element of the process of the invention is a combination of stage I (depot purge) taking into account the fatty acid depositing effects of the feeding history and stage II (flash deposition, i.e. deposition of nutritional fatty acids in the flesh of the fish). The level of monounsaturated fatty acids is decreased and the growth of the fish is simultaneously accelerated in the depot purge stage by administering a feed having high protein and low fat (oil) content. An LcPUFA enriched feed rich in long chain essential fatty acids (LcPUFA) is fed in the flash deposition stage and fish are made to deposit abruptly.

Using the process of the invention to produce the fish meat serving as the basis of the functional food, the fatty acid composition of the fish meat may be influenced more favourably in respect of long chain essential fatty acids, for example arachidonic acid (ARA), eicosapentaenoic acid (EPA and docosahexaenoic acid (DHA) than by earlier methods. The health protecting effect of food products obtained by the combined processes of the invention seems unambiguous in the light of the scientific data of the day. The fish meat of the invention and food products produced thereof may be useful in the primary and secondary prevention of heart attacks. Fish meat enriched with arachidonic acid + docosahexaenoic acid may be suitable for influencing fetal and postnatal development favourably. The process may be suitable for the production of fish meat serving as a raw material for functional food for the preventive and therapeutic treatment of other age groups and diseases.

## REFERENCES

Ackman, R.G., Sipos, J.C. 1964a. Application of specific response factors in the gas chromatographic analysis of methyl esters of fatty acids with flame ionisation detectors. J. Am. Oil Chem. Soc., 41.377-378.
Ackman, R.G., Sipos, J.C. 1964b. Flame ionisation detector response for the carbonyl carbon atom in the carboxyl group of fatty acids and esters. J. Chromatog., 16.298-305.

Bang H.O., Dyerberg J. 1980. Lipid metabolism and ischemic heart disease in Greenland Eskimos. Adv Nutr Res 1980;3:1-22.

Bell J.G., McGhee, F., Campbell, P.J., Sargent, J.R., 2003. Rapeseed oil as an alternative to marine fish oil in diets of post-smolt Atlantic salmon (Salmo salar): changes in flesh fatty acid composition and effectiveness of subsequent fish oil "wash out". Aquaculture 218, 515-528.

Bell, J.G., Sargent, J.R., 2003Arachidonic acid in aquaculture feeds: current status and future opportunities. Aquaculture 218; 491-499.

Benedito-Palos, L., Navarro, J.C., Bermejo-Nogales, A., Saera-Vila, A., Kaushik S. and Pérez-Sánchez, J. 2009. The time course of fish oil wash-out follows a simple dilution model in gilthead sea bream (Sparus aurata L.) fed graded levels of vegetable oils Aquaculture, 288(1-2), 98-105. http://dx.doi.org/10.1016/j.aquaculture.2008.11.010

Burdge G.C. 2006; Metabolism of $\alpha$-linolenic acid in humans. Prostaglandins, Leukotrienes and Essential Fatty Acids 75:161-168.

Chadwick, E. M. P. et al., (Editors) Evaluation of strategies for Saltwater Salmon Aquaculture NRC Research Press, Ottawa, Ontario, Canada (2010) page 40

Csengeri I., Gál D., Kosáros T., Pekár F., Bakos J., Potra F., Kovács Gy., Feledi T., Fazekas J., Biro J., J. Sándor Zs., Gy. Papp Zs., Jeney Zs., Rónyai A. (2011) A haltakarmányozás halliszt és halolaj nélkül? (Fish feeding without fishmeal and fish oil) Allattenyesztes és Takarmányozás, 60(3):281-294.

Dyerberg J, Bang HO, Hjorne N. 1975. Fatty acid composition of the plasma lipids in Greenland Eskimos. Am J Clin Nutr. 28(9):958-966.

Folch, J., Lees, M., Sloane-Stanley, G.H., 1957. A simple method for the isolation and purification of total lipids from animal tissues. J. Biol. Chem. 226, 497-509.

Glencross, B.D. 2006. The nutritional management of barramundi, Lates calcarifer - a review. Aquaculture Nutrition, 12: 291-309.

Glencross, B.D. 2008, A factorial growth and feed utilization model for barramundi, Lates calcarifer based on Australian production conditions. Aquaculture Nutrition, 14: 360-373. doi: 10.1111/j.1365-2095.2007.00543.x

Harris, W.S., Mozaffarian, D., Rimm, E., Kris-Etherton, P., Rudel, L.L., Appel, L.J., Engler, M.M., Engler, M.B., and Sacks, F. 2009. Omega-6 Fatty Acids and Risk for Cardiovascular Disease: A Science Advisory From the American Heart Association Nutrition Subcommittee of the Council on Nutrition, Physical Activity, and Metabolism; Council on Cardiovascular Nursing; and Council on Epidemiology and Prevention. Circulation 2009; 119;902-907. http://circ.ahajournals.org/cgi/content/full/119/6/902

Hartnell, G.F., MONSANTO TECHNOLOGY LLC, 2010. International Patent Application Publication WO2010027788A1: Aquaculture feed, products, and methods comprising beneficial fatty acids.

Hartnell, G.F. - MONSANTO, 2009. Patent Application Publication. US2009/02672A1: Aquaculture feed, products, and methods comprising beneficial fatty acids.

Henrotte, E., Mandiki, R.S.N.M., Prudencio, A.T., Vandecan, M., Mélard, Ch. and Kestemont, P. 2010. Egg and larval quality, and egg fatty acid composition of Eurasian perch breeders (Perca fluviatilis) fed different dietary DHA/EPA/AA ratios. Aquaculture Research, 41: 53-61. doi: 10.1111/j.1365-2109.2009.02455.x

Innis, S.M. 2005. Essential Fatty Acid Transfer and Fetal Development. Placenta, 26 (Suppl. A), Trophoblast Research, Vol. 19; S70-S75. doi:10.1016/j.placenta.2005.01.005

Jobling M 2004a. »Finishing« feeds for carnivorous fish and the fatty acid dilution model. Aquacult. Res. 35, 706-9

Jobling, 2004b. Are modifications in tissue fatty acid profiles following a change in diet the result of dilution? Test of a simple dilution model. Aquaculture 232, 551-62

Koven, W., van Anholt, R., Lutzky, S., Atia, I.B., Nixon, O., Ron, B., Tandler, A., 2003. The effect of dietary arachidonic acid on growth, survival, and cortisol levels in different-age gilthead seabream larvae (Sparus auratus) exposed to handling or daily salinity change. Aquaculture, 228(1-4), 307-320.

Kris-Etherton, P.M., Harris, W.S. & Appel, L.J. (2002; Fish Consumption, Fish Oil, Omega-3 Fatty Acids, and Cardiovascular Disease. Circulation; 106:2747-2757.

Lane, R.L., J.T. Trushenski, and C.C. Kohler 2006. Modification of Fillet Composition and Evidence of Differential Fatty Acid Turnover in Sunshine Bass Morone chrysops × M. saxatilis Following Change in Dietary Lipid Source. Lipids 41, 1029-1038.

Pickova, Jana, 2011. International Patent Application Publication Nr. WO2008136739A1: Compounded feed for aquaculture

Stoffel, W., Chu, F., and Ahrens, E.H., Jr., 1959. Analysis of long-chain fatty acids by gas-liquid chromatography - Micromethod for preparation of methyl esters. Anal. Chem., 31: 307-308.

Yildiz, M. 2008. Fatty Acid Composition of Some Commercial Marine Fish Feeds Available in Turkey. Turk. J. Vet. Anim. Sci. 2008; 32(3): 151-158

Zeitoun, L. H., Ullrey, D. E., Magee, W. T., Gill, J. L. & Bergen, W. G. 1976. Quantifying nutrient requirements of Fish. J. Fish. Res. Bd Canada, 33: 167-172.

**Claims**

1. A process for the feeding of fish providing edible fish meat, ***characterized in that*** the feeding process comprises at least two consecutive stages, wherein

   - in a stage I juvenile fish are fed with a feed of high protein and low fat content, said feed having
   a protein content of at least 48%;
   a fish oil content of at least 5%; and
   a fat content not higher than 12%
   relative to the total weight of said feed,
   the daily portion of said feed in stage I being not more than 1.2% of the metabolic body weight (MBW%) of the fish, wherein said metabolic body weight is equal to the body weight raised to the power of 0.8: $MBW=W^{0.8}$, wherein W is the kg body weight of the fish;
   to decrease the levels of saturated and monounsaturated fatty acids of the fish meat relative to the weight of the fish and simultaneously accelerate growth of the fish, then
   - in a subsequent stage II juvenile fish are fed with a feed having a fatty acid content of increased level(s) of one or more long chain polyunsaturated fatty acid(s) (LcPUFA), said feed having a fat content of at least 14%, to deposit the one or more LcPUFA in the fish meat, thereby increasing the level(s) of said LcPUFA(s) relative to the weight of the fish and the ratio of LcPUFA(s) to monounsaturated fatty acids in the flesh of the fish.

2. The process of claim 1, ***characterized in that*** the duration of stage I is 2-4 weeks.

3. The process of any one of claims 1-2, ***characterized in that*** the concentration of the one or more LcPUFA(s) relative to the total amount of feed in the feed used in stage II is at least 5 g/kg,
   and wherein the LcPUFA is preferably selected from the group consisting of arachidonic acid (ARA), eicosapentaenoic acid (EPA), docosahexaenoic acid (DHA) and/or any combinations thereof.

4. The process of any one of claims 1-3, ***characterized in that*** in the feed used in stage II the concentration of eicosapentaenoic acid (EPA) and docosahexaenoic acid (DHA) taken together is at least 40 g/kg, relative to the total amount of feed,
   wherein in stage II the ratio of EPA + DHA to oleic acid is increased in the flesh of the fish,
   and wherein the fish are of a species of the order *Perciformes.*

5. The process of any one of claims 1-4, ***characterized in that*** the duration of stage II is 3-4 weeks.

6. The process of any one of claims 1-5, ***characterized in that*** the fat content of the feed used in stage II is raised gradually, preferably by 0-30 g/kg or by 5-25 g/kg of the total weight of the feed weekly.

7. The process of any one of claims 1-6, ***characterized in that*** the feed used in the closing phase of the raising stage of fries prior stage I has a

   - protein content of at least 40%, and
   - a fat content not higher than 12%

   relative to the total weight of said feed.

8. The process of any one of claims 1-7, ***characterized in that*** the fish are of a species of the order *Perciformes*, preferably of the species barramundi (*Lates calcarifer*), and
   wherein preferably

   - feeding is started when juvenile fish reach a body weight of 300-400 g, preferably of 340-360 g; and/or
   - the daily portion of the feed in the closing phase of the raising stage of fries (preferably at a body weight ranging from 150 to 300 g) prior to starting stage I is not more than 1.7% of the metabolic body weight (MBW%) of said fish, wherein said metabolic body weight is equal to the body weight raised to the power of 0.8: $MBW=W^{0.8}$, wherein W is the kg body weight of the fish.

9. A kit of feeds for the feeding of fish, ***characterized in that*** it contains at least two types of feed for the feeding of juvenile fish in two consecutive stages, respectively, wherein

- the feed of stage I has

a protein content of at least 48%;
a fish oil content of at least 5%; and
a fat content not higher than 12%

relative to the total weight of said feed; and
- the feed of stage II has a fatty acid content of increased level(s) of one or more long chain polyunsaturated fatty acid(s) (LcPUFA), and the fat content of said feed is at least 14%.

10. The kit of feeds according to claim 9, wherein the feed of stage II is defined in any one of claims 5-6.

11. The kit of feeds according to claim 9 or 10 further containing a feed for the feeding of fries, preferably a feed defined in claim 7 or 8.

12. The use of a kit of feeds according to any one of claims 9-11 for the feeding of a fish species of the order *Perciformes* in the feeding process of claim 8.

13. Edible fish meat containing one or more LcPUFA(s) deposited during stage II feeding as defined in any of claims 1 to 6, said meat having a thus increased content of LcPUFA, wherein the ratio of the total weight of LcPUFAs to the weight of oleic acid is at least 1.05, preferably at least 1.06 or at least 1.07 based on the weight of the fish fillet, said edible fish meat containing the flesh of fish of a species of the order *Perciformes,* preferably of barramundi (*Lates calcarifer*),
said edible fish meat being preferably a fish fillet.

14. Food product containing the edible fish meat according to claim 13, said food product being preferably a functional food product.

15. A method for the production of a fish meat food product, preferably a functional food product, wherein the edible fish meat according to claim 13 is converted or processed into a food product.

## Patentansprüche

1. Verfahren zur Fischfütterung bereitstellend essbares Fischfleisch, **dadurch gekennzeichnet, dass** das Fütterungsverfahren mindestens zwei aufeinanderfolgende Abschnitte umfasst, wobei

- in einem Abschnitt I Jungfische mit einem Futter von hohen Proteingehalt und niedrigen Fettgehalt gefüttert werden, wobei das Futter mit
einem Proteingehalt von mindestens 48%;
einem Fischölgehalt von mindestens 5%; und
einem Fettgehalt, der nicht höher als 12% ist,
bezüglich des Gesamtgewichtes des Futters hat,
wobei die tägliche Portion des Futters in Abschnitt I nicht mehr als 1,2% des metabolischen Körpergewichtes (MBW%) des Fisches ist, wobei das metabolische Körpergewicht zur 0,8 Potenz des Körpergewichtes entspricht: $MBW=W^{0.8}$, wobei W das kg Körpergewicht des Fisches ist;
wodurch die Niveaus von gesättigten und einfach ungesättigten Fettsäuren des Fischfleisches bezüglich des Fischgewichtes verringert wird und gleichzeitig Wachstum des Fisches beschleunigt wird, dann
- in einem nachfolgenden Abschnitt II Jungfische mit einem Futter mit einem Fettsäuregehalt von erhöhtem/erhöhten Niveaue(s) von einer oder mehreren langkettigen, mehrfach ungesättigten Fettsäure(n) (LcPUFA) gefüttert werden, wobei das Futter den Fettgehalt von mindestens 14% hat,
wodurch die eine oder mehrere LcPUFA in dem Fischfleisch abgelagert wird/werden, damit das/die Niveau(s) der LcPUFA(s) bezüglich des Fischgewichtes und des Verhältnisses der LcPUFA(s) zur einfach ungesättigten Fettsäuren in dem Fischfleisch erhöht/erhöhen.

2. Verfahren nach Anspruch 1, **dadurch gekennzeichnet, dass** die Dauer des Abschnittes I 2-4 Wochen ist.

3. Verfahren nach einem der Ansprüche 1 bis 2, **dadurch gekennzeichnet, dass** die Konzentration die eine oder mehrere LcPUFA(s) bezüglich des Gesamtgewichtes des Futters in dem Futter verwendet in Abschnitt II mindestens 5 g/kg ist,

und wobei die LcPUFA vorzugsweise aus der Gruppe bestehend aus Arachidonsäure (ARA), Eicosapentaensäure (EPA), Docosahexaensäure (DHA) und/oder eine Kombination davon ausgewählt ist.

4. Verfahren nach einem der Ansprüche 1 bis 3, **dadurch gekennzeichnet, dass** in dem Futter verwendet in Abschnitt II die Konzentration der Eicosapentaensäure (EPA) und der Docosahexaensäure (DHA) zusammengenommen mindestens 40 g/kg bezüglich des Gesamtgewichtes des Futters ist,

wobei in Abschnitt II das Verhältnis von EPA + DHA zur Ölsäure in dem Fischfleisch erhöht wird,

und wobei die Fische zur einer Spezies der Ordnung *Perciformes* gehören.

5. Verfahren nach einem der Ansprüche 1 bis 4, **dadurch gekennzeichnet, dass** die Dauer des Abschnittes II 3-4 Wochen ist.

6. Verfahren nach einem der Ansprüche 1 bis 5, **dadurch gekennzeichnet, dass** der Fettgehalt des Futters verwendet in Abschnitt II schrittweise, vorzugsweise wöchentlich mit 0-30 g/kg oder 5-25 g/kg des Gesamtgewichtes des Futter erhöht wird.

7. Verfahren nach einem der Ansprüche 1 bis 6, **dadurch gekennzeichnet, dass** das Futter verwendet in der Schlussphase des Wachstumsabschnittes der Setzlinge vor Abschnitt I mit einem

- Proteingehalt von mindestens 40%, und
- einem Fettgehalt, der nicht höher als 12% ist,

bezüglich des Gesamtgewicht des Futters hat.

8. Verfahren nach einem der Ansprüche 1 bis 7, **dadurch gekennzeichnet, dass** die Fische einer Spezies der Ordnung *Perciformes*, vorzugsweise der Spezies Barramundi (*Lates calcarifer*) gehören, und wobei vorzugsweise

- die Fütterung gestartet wird, wenn die Jungfische ein Körpergewicht von 300-400 g, vorzugsweise von 340-360 g erreichen; und/oder
- die tägliche Portion des Futters in der Schlussphase des Wachstumsabschnitt der Setzlinge (vorzugsweise beim Körpergewicht im Bereich zwischen 150 und 300 g) vor startendem Abschnitt I nicht mehr als 1,7% des metabolischen Körpergewichtes (MBW%) des Fisches ist, wobei das metabolische Körpergeweicht zur 0,8 Potenz des Körpergewichtes entspricht: $MBW=W^{0.8}$, wobei W das kg Körpergewicht des Fisches ist.

9. Kit der Futter zur Fischfütterung, **dadurch gekennzeichnet, dass** es jeweils mindestens zwei Arten des Futters zur Jungfischfütterung in zwei aufeinanderfolgende Abschnitte enthält, wobei

- das Futter von Abschnitt I mit

einem Proteingehalt von mindestens 48%;
einem Fischölgehalt von mindestens 5%; und
einem Fettgehalt, der nicht höher als 12% ist,

bezüglich des Gesamtgewichtes des Futters hat; und
- das Futter von Abschnitt II einen Fettsäuregehalt von erhöhtem/erhöhten Niveaue(s) von einer oder mehreren langkettigen, mehrfach ungestättigten Fettsäure(n) (LcPUFA) hat, und der Fettgehalt des Futters mindestens 14% ist.

10. Kit der Futter nach Anspruch 9, wobei das Futter von Abschnitt II in einem der Ansprüche 5 bis 6 definiert ist.

11. Kit der Futter nach Anspruch 9 oder 10 ferner enthaltend ein Futter zur Fütterung der Setzlinge, vorzugsweise ein Futter definiert in Anspruch 7 oder 8.

12. Verwendung von Kit der Futter nach einem der Ansprüche 9 bis 11, zur Fütterung einer Fischspezies der Ordnung *Perciformes* in dem Fütterungsprozess von Anspruch 8.

**13.** Essbares Fischfleisch enthaltend eine oder meherere LcPUFA(s) abgelagert während Abschnitt II verwendete Fütterung wie definiert in einem der Ansprüche 1 bis 6, wobei der Fleisch so erhöhenden Gehalt von LcPUFA hat, wobei das Verhältnis des Gesamtgewichtes der LcPUFAs zum Gewicht der Ölsäure mindestens 1,05, vorzugsweise mindestens 1,06 oder mindestens 1,07 auf Grund des Gewichtes des Fischfilets ist, wobei das essbare Fischfleisch das Fischfleisch einer Spezies der Ordnung *Perciformes*, vorzugsweise des Barramundis (*Lates calcarifer*) enthält, wobei das essbare Fischfleisch vorzugsweise ein Fischfilet ist.

**14.** Nahrungsmittelprodukt enthaltend das essbare Fischfleisch nach Anspruch 13, wobei das Nahrungsmittelprodukt vorzugsweise ein funktionelles Nahrungsmittelprodukt ist.

**15.** Verfahren zur Herstellung eines Nahrungsmittelproduktes auf Basis von Fischfleisch, vorzugsweise eines funktionellen Nahrungsmittelproduktes, wobei das essbare Fischfleisch nach Anspruch 13 in ein Nahrungsmittelprodukt konvertiert oder verarbeitet wird.

**Revendications**

**1.** Procédé pour l'alimentation des poissons fournissant de la viande de poisson comestible, ***caractérisé en ce que*** le procédé d'alimentation comprend au moins deux étapes consécutives, dans lesquelles

- dans une étape I, des poissons juvéniles sont nourris avec un aliment de haute teneur en protéines et faible teneur en matières grasses, ledit aliment ayant
une teneur en protéines d'au moins 48% ;
une teneur en huile de poisson d'au moins 5% ; et
une teneur en matières grasses ne dépassant pas 12%
par rapport au poids total dudit aliment,
la portion quotidienne dudit aliment dans l'étape I n'étant pas plus de 1,2% du poids corporel métabolique (MBW%) du poisson, dans lequel ledit poids corporel métabolique est égal au poids corporel élevé à la puissance 0,8 : $MBW = W^{0,8}$, où W est le kg de poids corporel du poisson ;
pour diminuer les niveaux d'acides gras saturés et monoinsaturés de la viande de poisson par rapport au poids du poisson et accélérer simultanément la croissance du poisson, puis
- dans une étape ultérieur II, les poissons juvéniles sont nourris avec un aliment ayant une teneur en acides gras du (des) niveau(s) supérieur(s) d'un ou plusieurs acides gras polyinsaturés à longue chaîne (AGPI-LC), ledit aliment ayant une teneur en matières grasses d'au moins 14%,
pour déposer l'un ou plusieurs AGPI-LC dans la viande de poisson, augmentant ainsi le(s) niveau(s) dudit (desdites) AGPI-LC par rapport au poids du poisson et le rapport de AGPI-LC aux acides gras monoinsaturés dans la chair du poisson.

**2.** Le procédé selon la revendication 1, ***caractérisé en ce que*** la durée de l'étape I est de 2 à 4 semaines.

**3.** Le procédé selon l'une quelconque des revendications 1 à 2, ***caractérisé en ce que*** la concentration de l'un ou plusieurs AGPI-LC par rapport à la quantité totale d'aliment dans l'aliment utilisé dans l'étape II est d'au moins 5 g/kg, et dans lequel l'AGPI-LC est de préférence choisi dans le groupe consistant en l'acide arachidonique (ARA), l'acide eicosapentaénoïque (EPA), l'acide docosahexaénoïque (DHA) et/ou toute combinaison de ceux-ci.

**4.** Le procédé selon l'une quelconque des revendications 1 à 3, **caractérisé en ce que**, dans l'aliment utilisé dans l'étape II, la concentration d'acide eicosapentaénoïque (EPA) et d'acide docosahexaénoïque (DHA) pris ensemble est d'au moins 40 g/kg par rapport à la quantité totale de l'aliment,
dans lequel, dans l'étape II, le rapport EPA + DHA à l'acide oléique est augmenté dans la chair du poisson,
et dans lequel les poissons sont d'une espèce de l'ordre *Perciformes.*

**5.** Le procédé selon l'une quelconque des revendications 1 à 4, ***caractérisé en ce que*** la durée de l'étape II est de 3 à 4 semaines.

**6.** Le procédé selon l'une quelconque des revendications 1 à 5, ***caractérisé en ce que*** la teneur en matières grasses de l'aliment utilisé dans l'étape II est augmentée progressivement, de préférence de 0 à 30 g/kg ou de 5 à 25 g/kg du poids total de l'aliment chaque semaine.

**7.** Le procédé selon l'une quelconque des revendications 1 à 6, ***caractérisé en ce que*** l'aliment utilisé dans la phase finale de l'étape d'élevage des alevins avant stade I a une

    - teneur en protéines d'au moins 40%, et
    - une teneur en matières grasses ne dépassant pas 12%

par rapport au poids total dudit aliment.

**8.** Le procédé selon l'une quelconque des revendications 1 à 7, ***caractérisé en ce que*** les poissons sont d'une espèce de l'ordre *Perciformes,* de préférence de l'espèce barramundi (*Lates calcarifer*) et
dans lequel de préférence

    - l'alimentation commence lorsque les poissons juvéniles atteignent un poids corporel de 300 à 400 g, de préférence de 340 à 360 g ; et/ou
    - la partie quotidienne de l'aliment dans la phase finale de l'étape d'élevage des alevins (de préférence à un poids corporel allant de 150 à 300 g) avant de commencer l'étape I n'est pas supérieure à 1,7% du poids corporel métabolique (MBW%) dudit poisson, dans lequel ledit poids corporel métabolique est égal au poids corporel porté à la puissance 0,8 : $MBW = W^{0,8}$, où W est le kg de poids corporel du poisson.

**9.** Un kit d'aliments pour l'alimentation des poissons, *caractérisé en ce qu'*il contient au moins deux types d'aliment pour l'alimentation des poissons juvéniles en deux étapes consécutives, respectivement, dans lesquelles

    - l'aliment de l'étape I a

        une teneur en protéines d'au moins 48% ;
        une teneur en huile de poisson d'au moins 5% ; et
        une teneur en matières grasses ne dépassant pas 12%

    par rapport au poids total dudit aliment ; et
    - l'aliment de l'étape II a une teneur en acide gras du (des) niveau(x) supérieur(s) d'un ou plusieurs acides gras polyinsaturés à longue chaîne (AGPI-LC) et la teneur en matière grasse dudit aliment est d'au moins 14%.

**10.** Le kit d'aliments selon la revendication 9, dans lequel l'aliment de l'étape II est défini dans l'une quelconque des revendications 5 à 6.

**11.** Le kit d'aliments selon la revendication 9 ou 10 contenant en outre un aliment pour l'alimentation des alevins, de préférence un aliment définie dans la revendication 7 ou 8.

**12.** L'utilisation d'un kit d'aliments selon l'une quelconque des revendications 9 à 11 pour l'alimentation d'une espèce de poisson de l'ordre *Perciformes* dans le procédé d'alimentation selon la revendication 8.

**13.** Viande de poisson comestible contenant un ou plusieurs AGPI-LC déposé(s) lors de l'alimentation d'étape II selon l'une quelconque des revendications 1 à 6, ladite viande ayant ainsi une teneur augmenté en AGPI-LC, dans laquelle le rapport du poids total des AGPI-LC au poids d'acide oléique est d'au moins 1,05, de préférence d'au moins 1,06 ou au moins 1,07 basé sur le poids du filet de poisson, ladite viande de poisson comestible contenant la chair de poisson d'une espèce de l'ordre *Perciformes,* de préférence de barramundi (*Lates calcarifer*),
ladite viande de poisson comestible étant de préférence un filet de poisson.

**14.** Produit alimentaire contenant la viande de poisson comestible selon la revendication 13, ledit produit alimentaire étant de préférence un produit alimentaire fonctionnel.

**15.** Procédé pour la production d'un produit alimentaire de viande de poisson, de préférence un produit alimentaire fonctionnel, dans lequel la viande de poisson comestible selon la revendication 13 est convertie ou transformée en produit alimentaire.

**Fig 1:** Oleic acid and LcPUFA (EPA+DHA) levels (% - g/100g) in fries

**Fig 2:** Increase of the level of palmitic acid in barramundi fries

**Fig 3:** Increase of the level of oleic acid in barramundi fries

**Fig 4:** Optimum of EPA+DHA content in barramundi fries

**Fig 5:** Increase of the level of palmitic acid in juvenile barramundi

**Fig 6:** Increase of the level of oleic acid in juvenile barramundi

**EPA+DHA content (mg/g) in juvenile barramundi**

◆ EPA + DHA mg/g

—— Polinom. (EPA + DHA mg/g)

$y = 17,5x^2 - 30,3x + 25,065$

$R^2 = 0,9993$

Fatty acid content (mg/g)

Feeding level (MBW%)

**Fig 7:** Change of EPA+DHA content in juvenile barramundi

**Fig 8a**: Increase of the level of oleic acid and EPA+DHA levels (% - g/100g) in fries

**Fig 8b**: Increase of the level of oleic acid and EPA+DHA levels (% - g/100g) in juvenile fish

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20090202672 A1
- WO 2010027788 A1
- WO 2008136739 A1
- US 20120204802 A1
- US 200902672 A1

**Non-patent literature cited in the description**

- **DYERBERG J. et al.** *Am J Clin Nutr.,* 1975, vol. 28 (9), 958-966
- **BANG ; DYERBERG.** *Adv Nutr Res,* 1980, vol. 3, 1-22
- **HARRIS, W.S. et al.** *Circulation,* 2009, vol. 119, 902-907, http://circ.ahajournals.org/cgi/content/full/119/6/902
- **KOVEN, W. et al.** *Aquaculture,* 2003, vol. 228 (1-4), 307-320
- **HENROTTE, E. et al.** *Aquaculture Research,* 2010, vol. 41, 53-61
- **INNIS, S.M.** *Placenta,* vol. 26
- *Trophoblast Research,* 2005, vol. 19, S70-S75
- **BURDGE G.C.** Metabolism of $\alpha$-linolenic acid in humans. *Prostaglandins, Leukotrienes and Essential Fatty Acids,* 2006, vol. 75, 161-168
- **KRIS-ETHERTON et al.** *Circulation,* 2002, vol. 106, 2747-2757
- **YILDIZ, M. et al.** *Turk. J. Vet. Anim. Sci.,* 2008, vol. 32 (3), 151-158
- **JOBLING M.** *Aquacult. Res.,* 2004, vol. 35, 706-9
- **LANE, R.L. et al.** *Lipids,* 2006, vol. 41, 1029-1038
- **JOBLING M.** *Aquaculture,* 2004, vol. 232, 551-62
- **BELL J.G. et al.** *Aquaculture,* 2003, vol. 218, 515-528
- **BENEDITO-PALOS, L. et al.** *Aquaculture,* 2009, vol. 288 (1-2), 98-105
- **CSENGERI I. et al.** *Allattenyesztes és Takarmányozás,* 2011, vol. 60 (3), 281-294
- **HARTNELL, G.F.** *MONSANTO COMPANY,* 2009
- **HARTNELL, G.F.** *MONSANTO TECHNOLOGY LLC,* 2010
- **GLENCROSS, B.D.** *Aquaculture Nutrition,* 2008, vol. 14, 360-373
- **GLENCROSS, B.D.** *Aquaculture Nutrition,* 2006, vol. 12, 291-309
- **MOHAMED ; ELAGBA HAI ALI ; AL-SABAHI ; GAMAL NASSER.** Fatty acids content and profile of common commercial Nile fishes in Sudan. *International Journal of Fisheries and Aquaculture,* 2011, vol. 3 (6), 99-104
- **MOINI, S. et al.** The Fatty Acids Profile in Mackerel (Scomberomorus guttatus) and its Shelf Life in Cold Storage at -18°C. *Global Veterinaria,* 2012, vol. 8 (6), 665-669
- **LJUBOJEVIC D et al.** Fatty Acid Composition of Fishes from Inland Waters. *Bulgarian Journal of Agricultural Science,* 2013, vol. 19 (1), 62-71
- **ACKMAN, R.G. ; SIPOS, J.C.** *J. Am. Oil Chem. Soc.,* 1964, vol. 41, 377-378
- **ACKMAN, R.G. ; SIPOS, J.C.** *J. Chromatog,* 1964, vol. 16, 298-305
- **ZEITOUN, L. H. et al.** *J. Fish. Res. Bd Canada,* 1976, vol. 33, 167-172
- Evaluation of strategies for Saltwater Salmon Aquaculture. NRC Research Press, 2010, 40
- **FOLCH, J. ; LEES, M. ; SLOANE-STANLEY, G.H.** *J. Biol. Chem.,* 1957, vol. 226, 497-509
- **STOFFEL, W. ; CHU, F. ; ÉS AHRENS, E.H., JR.** *Anal. Chem.,* 1959, vol. 31, 307-308
- **ACKMAN, R.G. ; SIPOS, J.C.** Application of specific response factors in the gas chromatographic analysis of methyl esters of fatty acids with flame ionisation detectors. *J. Am. Oil Chem. Soc.,* 1964, vol. 41, 377-378
- **ACKMAN, R.G. ; SIPOS, J.C.** Flame ionisation detector response for the carbonyl carbon atom in the carboxyl group of fatty acids and esters. *J. Chromatog.,* 1964, vol. 16, 298-305
- **BANG H.O. ; DYERBERG J.** Lipid metabolism and ischemic heart disease in Greenland Eskimos. *Adv Nutr Res,* 1980, vol. 3, 1-22

- **BELL J.G. ; MCGHEE, F. ; CAMPBELL, P.J. ; SARGENT, J.R.** Rapeseed oil as an alternative to marine fish oil in diets of post-smolt Atlantic salmon (Salmo salar): changes in flesh fatty acid composition and effectiveness of subsequent fish oil ''wash out. *Aquaculture,* 2003, vol. 218, 515-528
- **BELL, J.G. ; SARGENT, J.R.** Arachidonic acid in aquaculture feeds: current status and future opportunities. *Aquaculture,* 2003, vol. 218, 491-499
- **BENEDITO-PALOS, L. ; NAVARRO, J.C. ; BERMEJO-NOGALES, A. ; SAERA-VILA, A. ; KAUSHIK S. ; PÉREZ-SÁNCHEZ, J.** The time course of fish oil wash-out follows a simple dilution model in gilthead sea bream (Sparus aurata L.) fed graded levels of vegetable oils. *Aquaculture,* 2009, vol. 288 (1-2), 98-105, http://dx.doi.org/10.1016/j.aquaculture.2008.11.010
- **CSENGERI I. ; GÁL D. ; KOSÁROS T. ; PEKÁR F. ; BAKOS J. ; POTRA F. ; KOVÁCS GY. ; FELEDI T. ; FAZEKAS J. ; BIRO J.** A haltakarmányozás halliszt és halolaj nélkül? (Fish feeding without fishmeal and fish oil). *Allattenyesztés és Takarmányozás,* 2011, vol. 60 (3), 281-294
- **DYERBERG J ; BANG HO ; HJORNE N.** Fatty acid composition of the plasma lipids in Greenland Eskimos. *Am J Clin Nutr.,* 1975, vol. 28 (9), 958-966
- **FOLCH, J. ; LEES, M. ; SLOANE-STANLEY, G.H.** A simple method for the isolation and purification of total lipids from animal tissues. *J. Biol. Chem.,* 1957, vol. 226, 497-509
- **GLENCROSS, B.D.** The nutritional management of barramundi, Lates calcarifer - a review. *Aquaculture Nutrition,* 2006, vol. 12, 291-309
- **GLENCROSS, B.D.** A factorial growth and feed utilization model for barramundi, Lates calcarifer based on Australian production conditions. *Aquaculture Nutrition,* 2008, vol. 14, 360-373
- **HARRIS, W.S. ; MOZAFFARIAN, D. ; RIMM, E. ; KRIS-ETHERTON, P. ; RUDEL, L.L. ; APPEL, L.J. ; ENGLER, M.M. ; ENGLER, M.B. ; SACKS, F.** Omega-6 Fatty Acids and Risk for Cardiovascular Disease: A Science Advisory From the American Heart Association Nutrition Subcommittee of the Council on Nutrition, Physical Activity, and Metabolism; Council on Cardiovascular Nursing; and Council on Epidemiology and Prevention. *Circulation,* 2009, vol. 119, 902-907, http://circ.ahajournals.org/cgi/content/full/119/6/902
- **HARTNELL, G.F.** *MONSANTO,* 2009
- **HENROTTE, E. ; MANDIKI, R.S.N.M. ; PRUDENCIO, A.T. ; VANDECAN, M. ; MÉLARD, CH. ; KESTEMONT, P.** Egg and larval quality, and egg fatty acid composition of Eurasian perch breeders (Perca fluviatilis) fed different dietary DHA/EPA/AA ratios. *Aquaculture Research,* 2010, vol. 41, 53-61
- **INNIS, S.M.** Essential Fatty Acid Transfer and Fetal Development. *Placenta,* 2005, vol. 26
- *Trophoblast Research,* vol. 19, S70-S75
- **JOBLING M.** »Finishing« feeds for carnivorous fish and the fatty acid dilution model. *Aquacult. Res.,* 2004, vol. 35, 706-9
- **JOBLING.** Are modifications in tissue fatty acid profiles following a change in diet the result of dilution? Test of a simple dilution model. *Aquaculture,* 2004, vol. 232, 551-62
- **KOVEN, W. ; VAN ANHOLT, R. ; LUTZKY, S. ; ATIA, I.B. ; NIXON, O. ; RON, B. ; TANDLER, A.** The effect of dietary arachidonic acid on growth, survival, and cortisol levels in different-age gilthead seabream larvae (Sparus auratus) exposed to handling or daily salinity change. *Aquaculture,* 2003, vol. 228 (1-4), 307-320
- **KRIS-ETHERTON, P.M. ; HARRIS, W.S. ; APPEL, L.J.** Fish Consumption, Fish Oil, Omega-3 Fatty Acids, and Cardiovascular Disease. *Circulation,* 2002, vol. 106, 2747-2757
- **LANE, R.L. ; J.T. TRUSHENSKI ; C.C. KOHLER.** Modification of Fillet Composition and Evidence of Differential Fatty Acid Turnover in Sunshine Bass Morone chrysops × M. saxatilis Following Change in Dietary Lipid Source. *Lipids,* 2006, vol. 41, 1029-1038
- **STOFFEL, W. ; CHU, F. ; AHRENS, E.H., JR.** Analysis of long-chain fatty acids by gas-liquid chromatography - Micromethod for preparation of methyl esters. *Anal. Chem.,* 1959, vol. 31, 307-308
- **YILDIZ, M.** Fatty Acid Composition of Some Commercial Marine Fish Feeds Available in Turkey. *Turk. J. Vet. Anim. Sci.,* 2008, vol. 32 (3), 151-158
- **ZEITOUN, L. H. ; ULLREY, D. E. ; MAGEE, W. T. ; GILL, J. L. ; BERGEN, W. G.** Quantifying nutrient requirements of Fish. *J. Fish. Res. Bd Canada,* 1976, vol. 33, 167-172